# EUROPÄISCHE PATENTSCHRIFT

(11) **EP 3 839 855 B1**
(45) Veröffentlichungstag und Bekanntmachung des Hinweises auf die Patenterteilung: **03.04.2024**
(21) Anmeldenummer: 19217166.8
(22) Anmeldetag: 17.12.2019
(51) Int. Cl.: G06Q 20/20, G07G 1/00, G06T 7/194, G06T 7/20

(54) **SELBSTBEDIENUNGS-REGISTRIERTERMINAL UND VERFAHREN**
SELF-SERVICE REGISTRATION TERMINAL AND METHOD
TERMINAL D'ENREGISTREMENT LIBRE-SERVICE ET PROCÉDÉ

(43) Veröffentlichungstag der Anmeldung: 23.06.2021
(73) Patentinhaber: Diebold Nixdorf Systems GmbH, 33106 Paderborn (DE)
(72) Erfinder: ENGELNKEMPER, Sebastian, 33449 Langenberg (DE); KNOBLOCH, Alexander, 33100 Paderborn (DE); STIEBER, Jonathan, 33106 Paderborn (DE)
(74) Vertreter: Viering, Jentschura & Partner mbB Patent- und Rechtsanwälte

(56) Entgegenhaltungen:
- EP-A1- 3 211 611
- EP-A1- 3 379 505
- US-A1- 2016 210 829
- US-A1- 2018 373 927
- US-A1- 2019 258 870

## Beschreibung

Verschiedene Ausführungsbeispiele betreffen ein Selbstbedienungs-Registrierterminal und ein computerimplementiertes Verfahren.

Im herkömmlichen Einzelhandel bietet ein Selbstbedienungs-Registrierterminal dem Kunden die Möglichkeit, die gewünschten Produkte selbst zu scannen (z.B. ohne Unterstützung) oder alternativ sich beim Scannen der Produkte von einem Mitarbeiter unterstützen zu lassen. Ein solches Selbstbedienungs-Registrierterminal sorgt zwar für einen längeren Registrier- und Bezahlvorgang, dafür aber für mehr Anonymität für den Kunden, eine Verkürzung der Wartezeit in der Schlange, einen größeren Durchsatz auf die gesamte Filiale bezogen und geringere Personalkosten für den Einzelhandel. Mit einem Selbstbedienungs-Registrierterminal scannt nicht notwendigerweise ein Kassierer, sondern jeder Kunde die Barcodes der zu kaufenden Produkte selbst. Unglücklicherweise können bei der Verwendung eines Selbstbedienungs-Registrierterminals ökonomische Verluste entstehen, wenn absichtlich oder unabsichtlich Artikel nicht gescannt bzw. registriert werden. Dem wird herkömmlicherweise entgegengewirkt mittels eines sogenannten Gewichtsabgleichs, bei dem ein Referenzgewicht mit dem Gewicht des gescannten Artikels abgeglichen und Abweichungen detektiert werden. Das Gewicht des Artikels wird dabei mittels einer sogenannten Sicherheitswaage vor und/oder nach dem Scannen des Artikels erfasst. Stimmt das Gewicht des gescannten Artikels nicht mit dem erwarteten Referenzgewicht überein, wird davon ausgegangen, dass der Kunde nicht den Artikel gescannt hat, den er erwerben wollte. Druckschrift EP 3 379 505 A1 offenbart ein Selbstbedienungsterminal, welches aufgrund von erfassten Bilddaten Bewegungsmuster, wie etwa die Handbewegung eines Benutzers, sowie Objekte in einem Erfassungsbereich, wie etwa ein Objekt in der Hand eines Benutzers, feststellt und diese mit durch ein Lesegerät ermittelten Informationen vergleicht, um festzustellen, ob ein zu bezahlendes Produkt ordnungsgemäß erfasst wurde. Druckschrift US 2016/210829 A1 offenbart ein System, in welchem eine RGB-D dazu eingesetzt wird, um einen Kunden und ein Verkaufspersonal in einem Erfassungsbereich basierend auf einem Entfernungsbild zu erkennen und die Handbewegungen der erkannten Personen aufgrund von festgestellten Knochenstrukturen der jeweiligen Hand in mehreren Bildern abzuleiten. Verdächtige Handbewegungen, wie etwa solche, die Produkt- oder Geldentwendungen darstellen, können somit erkannt werden. Druckschrift US 2019/258870 A1 offenbart ein System, welches aufeinanderfolgende Bilder einer Videokamera in einer Verkaufseinrichtung analysiert, um festzustellen, ob ein Operator ein Produkt in einen Erfassungsbereich bewegt bzw. aus diesem entfernt. Hierbei wird festgestellt, ob ein detektiertes Objekt auch für eine Verkaufstransaktion erfasst wurde, oder ob es ohne Erfassung mitgenommen wurde, beispielsweise durch Verdecken des Produkts beim Scannen durch die Operatorhand oder ein anderes Produkt. Druckschrift US 2018/373927 A1 bezieht sich auf ein System, in welchem durch Auswerten von Tiefeninformation von Bilddaten Objekte in Bewegungsmustern herausgefiltert werden können. So können beispielsweise Handbewegungen und -gesten erkannt werden. Druckschrift EP 3 211 611 A1 offenbart ein System zum Erkennen eines leeren bzw. nicht-leeren Transportbehälters, in welchem Bilddaten mit einem angelernten Referenzmuster eines leeren Transportbehälters verglichen werden. Bei Abweichungen von dem Referenzmuster kann festgestellt werden, dass der Transportbehälter nicht leer ist.

Gemäß verschiedenen Ausführungsformen wurde anschaulich erkannt, dass der Gewichtsabgleich in seiner Anwendbarkeit sehr beschränkt ist. Beispielsweise wird nicht der gesamte Vorgang des Scannens des Artikels, z.B. die Entnahme des Artikels aus dem Warenkorb und/oder das Bewegen des Artikels in den Scan-Bereich, überwacht. Dadurch bleiben Sicherheitslücken zurück, so dass beispielsweise nicht erkannt werden kann, wenn ein Artikel direkt vom Warenkorb entnommen und ungescannt vom Kunden einbehalten wird. Ebenso werden komplexere Täuschungsversuche, bei denen der Kunde gezielt Artikel ähnlichen Gewichts gegeneinander austauscht, nicht erkannt.

Anschaulich wird gemäß verschiedenen Ausführungsformen überwacht, auf welche Weise der Artikel entnommen, gescannt und wieder abgelegt wird (d.h. dessen Bewegung wird überwacht), um zu erkennen, ob ein Täuschungsversuch vorliegen könnte. Weicht das dabei ermittelte Bewegungsmuster des Artikels zu stark von dem erwarteten Muster (auch als Referenzmuster bezeichnet) ab, kann dies mittels eines Alarms einem Mitarbeiter mitgeteilt werden. Dieser kann dann überprüfen, ob der Unstimmigkeit ein Versehen des Kunden oder ein tatsächlicher Täuschungsversuch zugrunde liegt. Ebenso können so ermittelte kleinere Unstimmigkeiten (anschaulich Verdachtsmomente), die einzeln betrachtet noch keine Annahme eines Täuschungsversuchs rechtfertigen, aggregiert werden. Übersteigt die Summe der Unstimmigkeiten dann einen gewissen Schwellenwert, kann ebenso Alarm ausgelöst werden.

Diese Überwachung kann auf optischem Wege erfolgen, indem Bilddaten analysiert werden. Die Komplexität der Bilddaten kann gemäß verschiedenen Ausführungsformen reduziert werden, indem die Bildbestandteile, welche nur die Umgebung zeigen, mittels eines Abgleichs mit Tiefeninformationen herausgefiltert werden. Dies erreicht, dass die zu analysierende Datenmenge in ihrer Komplexität reduziert wird und weniger Störgrößen auftreten (die Menge an Daten kann beispielsweise gleich bleiben).

Gemäß verschiedenen Ausführungsformen kann ein Selbstbedienungs-Registrierterminal (kurz auch als SB-Registrierterminal oder Selbstbedienung-Registrierterminal bezeichnet) aufweisen: eine Bilderfassungsvorrichtung, welche eingerichtet ist, Bilddaten eines Erfassungsbereichs zu erfassen; eine Produkterfassungsvorrichtung zum Erfassen einer Produktkennung eines Produkts in dem Erfassungsbereich, wenn das Produkt der Produkterfassungsvorrichtung präsentiert wird; eine Steuervorrichtung, die eingerichtet ist: zum Ermitteln von Zahlungsinformationen basierend auf der Produktkennung; zum Ermitteln eines Bewegungsmusters basierend auf den Bilddaten, wobei das Bewegungsmuster eine Bewegung (z.B. eines Produktes und/oder einer Hand) in dem Erfassungsbereich repräsentiert; zum Ermitteln einer Angabe über eine Vertrauenswürdigkeit der Zahlungsinformationen basierend auf dem Bewegungsmuster.

Es zeigen
- Figur 1: ein SB-Registrierterminal gemäß verschiedenen Ausführungsformen in einem schematischen Aufbaudiagram;
- Figur 2: ein SB-Registrierterminal gemäß verschiedenen Ausführungsformen in einem schematischen Kommunikationsdiagramm;
- Figur 3: ein SB-Registrierterminal gemäß verschiedenen Ausführungsformen in einer schematischen Seitenansicht;
- Figuren 4, 10 und 13: jeweils ein Verfahren gemäß verschiedenen Ausführungsformen in einem schematischen Ablaufdiagram;
- Figuren 5 und 6: jeweils ein Bewegungsmuster gemäß verschiedenen Ausführungsformen in einem schematischen Diagramm;
- Figur 7: ein Ermitteln eines Bewegungsmusters gemäß verschiedenen Ausführungsformen in einem schematischen Ablaufdiagramm;
- Figur 8: ein Ermitteln einer Unbedenklichkeitsangabe gemäß verschiedenen Ausführungsformen in einem schematischen Ablaufdiagramm;
- Figuren 9, 11 und 12: jeweils ein SB-Registrierterminal in einem Verfahren gemäß verschiedenen Ausführungsformen in einer schematischen Seitenansicht; und
- Figur 14: ein künstliches neuronales Netz gemäß verschiedenen Ausführungsformen in einem schematischen Aufbaudiagram.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Der Begriff "Steuervorrichtung" kann als jede Art einer Logik implementierenden Entität verstanden werden, die beispielsweise eine Verschaltung und/oder einen Prozessor aufweisen kann, welche Software ausführen kann, die in einem Speichermedium, in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems (z.B. seines Arbeitspunkts), z.B. einer Maschine oder einer Anlage, z.B. deren Komponenten, zu steuern.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Gemäß verschiedenen Ausführungsformen kann ein Datenspeicher (allgemeiner auch als Speichermedium bezeichnet) ein nichtflüchtiger Datenspeicher sein. Der Datenspeicher kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein. Beispielsweise kann in dem Datenspeicher eines oder mehr als eines von Folgendem gespeichert werden: eine Datenbank (kann auch als Referenzdatenbank bezeichnet werden), ein oder mehr als ein Referenz-Bewegungsmuster; eine oder mehr als eine Referenz-Tiefeninformationen; eine oder mehr als eine Referenz-Farbinformationen; Codesegmente, die einen oder mehr als einen Verarbeitungsalgorithmus (vereinfacht auch als Algorithmus bezeichnet) implementieren. Die Datenbank kann einen oder mehrere Datensätze aufweisen, von denen jeder Datensatz eine Produktkennung einer Zahlungsinformation zuordnet.

Hierin wird sich unter anderem auf ein künstliches neuronales Netz (kNN) bezogen. Das Beschriebene kann in Analogie gelten, wenn alternativ oder zusätzlich zu dem kNN ein anderer trainierbarer Algorithmus verwendet wird, z.B. eine Stützvektormaschine (auch als Support-Vektor-Maschinen bezeichnet) oder ein langes Kurzzeitgedächtnis (auch als Long-Short-Term-Memory oder LSTM bezeichnet). Das kNN kann eine Vielzahl von Knoten (anschaulich künstliche Neuronen) und ein Verbindungsnetz (die Zuordnung von Verbindungen zu Knoten) aufweisen. Anschaulich werden bei einem kNN analog zu biologischen Neuronen die Prozesse zur Informationsaufnahme und Informationsverarbeitung nachgebildet. Dies wird über eine von den Gegebenheiten abhängige Anzahl von Schichten versteckter Neuronen und die Signale übertragenden Aktivierungsfunktionen realisiert.

Die Topologie des Algorithmus beschreibt die Struktur des Verbindungsnetzes, d.h., wie viele Knoten sich auf wie vielen Schichten verteilen, und wie diese untereinander verbunden sind. Beispielsweise können mehrere Knoten in hintereinander liegenden Schichten angeordnet werden, deren erste Schicht den Eingang des Algorithmus und deren letzte Schicht den Ausgang des Algorithmus bildet. Die letzte Schicht, deren Ausgabe überhaupt außerhalb des Verbindungsnetzes sichtbar wird, wird Ausgabeschicht genannt. Davorliegende Schichten werden entsprechend als verdeckte Schicht bezeichnet. Unter Verwendung eines Graphen können die künstlichen Neuronen als Knoten und ihre Verbindungen als Kanten dargestellt werden. Der Algorithmus ist in diesem Fall beispielhaft ein gerichteter Graph mit typisierten Knoten.

Nach der Konstruktion des Algorithmus wird dieser zunächst trainiert (auch als Trainingsphase bezeichnet), in welcher der Algorithmus auf die anzutrainierende Arbeitsweise angepasst wird (anschaulich "lernt"). Dazu werden dem Algorithmus Daten (die Trainingsdaten) zugeführt, auf dessen Grundlage der Algorithmus lernt, die gewünschte Arbeitsweise nachzubilden. Eine zutreffende Ausgabe des Algorithmus verstärkt dabei das Erlernte (d.h. einen bestimmten Signalpfad durch das Verbindungsnetz hindurch), wohingegen eine unzutreffende Ausgabe den Signalpfad abschwächt. Auf diese Weise bilden sich nach und nach diejenigen Pfade durch das Verbindungsnetz heraus, welche die gewünschte Arbeitsweise am besten beschreiben.

In der Trainingsphase kann einer oder mehr als einer der folgenden Vorgänge erfolgen: Modifizieren des Verbindungsnetz (z.B. Bilden oder Löschen von Verbindungen); Ändern der Gewichtung von Knoten; Modifizieren der Eigenschaften (z.B. Schwellenwerte) der Knoten; Modifizieren der Anzahl von Knoten; Modifikation von Aktivierungs-, Propagierungs- und/oder Ausgabefunktion.

Im Training des Algorithmus (z.B. des kNN) werden die Trainingsdaten gemäß den jeweils gewünschten Eingangsparametern ausgewählt. In einem Beispiel weisen die eingehenden Trainingsdaten Bilddaten des Erfassungsbereichs auf, von denen die jeweilige Zielgröße (z.B. Klasse oder zu erkennende Objekte) bekannt ist. Die Trainingsdaten können beispielsweise über Zeitstempel oder deren Herkunft synchronisiert und/oder in Beziehung zueinander gesetzt werden. Es ist darauf hinzuweisen, dass sowohl die im Eingangsvektor des Algorithmus enthaltenen Parameter als auch die im Ausgangsvektor des Algorithmus enthaltenen Parameter stark anwendungsabhängig sind und entsprechend ausgewählt werden.

Gemäß verschiedenen Ausführungsformen werden Abweichungen zwischen Bewegungsmustern (auch als Muster-Abweichungen bezeichnet) ermittelt. Die Muster-Abweichungen werden beispielsweise durch untypische Bewegungen in dem Erfassungsbereich hervorgerufen, d.h. sie entstehen oder werden größer, wenn die Bewegung nicht der Erwartung entspricht. Beispielsweise kann eine Sequenz von Bilddaten (anschaulich mehrere hintereinander aufgenommene Bilddaten) des zu untersuchenden Erfassungsbereichs (oder nur einer Zone dessen) verwendet werden, um das Bewegungsmuster zu ermitteln. Veränderungen zwischen den Bilddaten der Sequenz werden durch die Bewegung von Objekten in dem zu untersuchenden Erfassungsbereich (oder nur einer Zone dessen) hervorgerufen, welche von dem Bewegungsmuster beschrieben wird. Das ermittelte Bewegungsmuster kann mit einem oder mehr als einem Referenz-Bewegungsmuster (welches beispielsweise aus einem Referenz-Registriervorgang extrahiert wurden, beispielsweise in einem vorangegangenen Trainingsverfahren) verglichen werden und anhand der Muster-Abweichungen wird entschieden, ob das ermittelte Bewegungsmuster verdächtig ist oder nicht. Es können selbstverständlich auch Abstufungen zwischen dem Ergebnis "verdächtig" oder "unverdächtig" ermittelt werden (auch als Grad der Verdächtigkeit bezeichnet). Die Verdächtigkeit kann hierin als Inverses der Vertrauenswürdigkeit verstanden werden.

Gemäß verschiedenen Ausführungsformen kann das eine oder mehr als eine Referenz-Bewegungsmuster (vereinfacht auch als Referenzmuster bezeichnet) abgespeichert sein, z.B. auf einem Speichermedium und/oder in einer Datenbank. Das eine oder mehr als eine Referenzmuster kann mehrere Referenzmuster aufweisen (z.B. zwei oder mehr als zwei, z.B. drei, vier, fünf, sechs, sieben, acht, neun, zehn oder mehr als zehn, z.B. zwanzig, fünfzig, z.B. hundert oder mehr als hundert).

Gemäß verschiedenen Ausführungsformen werden Tiefeninformationen mittels einer dreidimensionalen (3D) Bilderfassung gewonnen. Die Tiefeninformationen können beispielsweise verwendet werden, um zu erkennen, ob sich ein Objekt in dem Erfassungsbereich (oder dessen Zonen) befindet, z.B. oberhalb einer Referenzebene. Somit kann unterschieden werden, in welcher Zone des Erfassungsbereich sich ein Objekt befindet. Beispielsweise können die Tiefeninformationen durch den gesamten Erfassungsbereich hindurch gewonnen werden, so dass anschaulich von oben erkannt werden kann, in welcher räumlichen Position sich ein oder mehr als ein Objekt relativ zu der Referenzebene befindet.

Gemäß verschiedenen Ausführungsformen kann die Bilderfassungsvorrichtung Bilddaten des Erfassungsbereichs aus mehreren optischen Perspektiven (z.B. mittels mehrerer Objektive bereitgestellt) bereitstellen, welche Tiefeninformationen des Erfassungsbereichs repräsentieren (z.B. stereoskopisch). Zum Ermitteln der Tiefeninformationen können die Bilddaten, welche aus unterschiedlichen Perspektiven (z.B. mittels mehrerer Objektive) erfasst werden, einander überlagert werden, z.B. unter Berücksichtigung einer relativen räumlichen Lage (Position und/oder Ausrichtung) der Objektive zueinander. Eine Kamera kann einen (optischen) Bilderfassungssensor aufweisen und zumindest ein dem Bilderfassungssensor zugeordnetes Objektiv (auch als Linsenanordnung bezeichnet). Die Linsenanordnung einer plenoptischen Kamera kann auch ein Gitter aus mehreren Mikrolinsen aufweisen. Beispielsweise kann die Bilderfassungsvorrichtung (z.B. RealSense F200, INTEL R200 und/oder Intel SR300) einen RGB-Bilderfassungssensor und/oder einen 3D-Bilderfassungssensor aufweisen.

Ein Bilderfassungssensor (auch als Bildsensor oder optischer Sensor bezeichnet) kann einen oder mehrere photoelektrisch aktive Bereiche (kann auch als Pixel bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bilderfassungssensor kann beispielsweise ein CCD-Sensor (charge-coupled device Sensor) und/oder einen aktiven Pixelsensor (kann auch als CMOS-Sensor bezeichnet werden) aufweisen oder daraus gebildet sein. Optional kann ein Bilderfassungssensor wellenlängensensitiv eingerichtet sein (z.B. zum Erfassen von Farbinformationen), z.B. mittels mehrerer Farbfilter (z.B. in Gitterform).

Gemäß verschiedenen Ausführungsformen kann ein SB-Registrierterminal eingerichtet sein, die Produkte, die ein Kunde erwerben will, zu registrieren, z.B. mittels Scannens der Produkte an einem Scanner (z.B. einen Barcodescanner). Ferner kann das SB-Registrierterminal ein (z.B. digitales) Kassensystem aufweisen (dann auch als Selbstbedienungskasse bezeichnet), welches eingerichtet ist, einen Bezahlprozess durchzuführen. Der Bezahlprozess kann beispielsweise aufweisen, dass der Kunde die zu erwerbenden Produkte auch bezahlt. Das Kassensystem kann zumindest eines von Folgendem aufweisen: einen Bildschirm (z.B. einen berührungsempfindlichen Bildschirm), einen Drucker (z.B. zum Ausdrucken einer Rechnung und/oder eines Etiketts), eine (z.B. programmierbare) Kassentastatur (kann auch Teil des berührungsempfindlichen Bildschirms sein), ein Zahlungsmittel-Terminal zum Annehmen eines Zahlungsmittels (z.B. Bargeld oder eine Debitkarte). Das Zahlungsmittel-Terminal kann beispielsweise ein Elektronisch-Zahlungsmittel-Terminal (kann auch als EC-Terminal bezeichnet werden, "EC" - electronic cash, z.B. zum Auslesen einer Debitkarte und/oder einer Kreditkarte) sein. Das Kassensystem und der Scanner können auf derselben Seite (z.B. einer Säule) des SB-Registrierterminals angeordnet sein, so dass diese von einer Position aus bedient werden können.

Im Folgenden wird sich auf Produkte (z.B. Waren, kann auch als Artikel bezeichnet werden) als Objekte bezogen. Das Beschriebene kann in Analogie auch für andere Objekte gelten, wie beispielsweise eine Hand.

Im Folgenden wird sich auf Bilddaten und deren Verarbeitung bezogen. Die Bilddaten können ein digitales Abbild der Realität (z.B. des Erfassungsbereichs) zu einem Zeitpunkt des Erfassens der Bilddaten sein. Die Abbildung der Realität kann beispielsweise mittels eines Objektivs erfolgen, welches Licht auf die Oberfläche eines Bilderfassungssensors (z.B. eines Bayer-Sensors) projiziert. Das Erfassen der Bilddaten kann aufweisen, den Bilderfassungssensor auszulesen während das Licht auf dessen Oberfläche projiziert wird. Die so erhaltenen Bilddaten können zunächst im sogenannten Rohdatenformat (auch als RAW bezeichnet) sein, welches pixelweise die ausgelesenen Messwerte des Bilderfassungssensors aufweist und/oder als solche verarbeitet werden. Die Bilddaten können optional beim Verarbeiten in ein anderes Bildformat überführt sein oder werden, z.B. in eine Rastergrafik (verschieden von RAW als Rastergrafik) oder eine Vektorgrafik, so dass deren weitere Verarbeitung in diesem Bildformat erfolgt, oder können beliebig zwischen diesen umgewandelt werden. Das Überführen kann optional aufweisen, die Messwerte des Bilderfassungssensors zu interpolieren (z.B. mittels Demosaickings), z.B. um vollständige mehrfarbige Farbinformationen für jedes Pixel zu erhalten oder um weniger Speicherplatz bzw. Rechenleistung zu benötigen. Die Bilddaten können optional komprimiert (z.B. um weniger Speicherplatz bzw. Rechenleistung zu benötigen) oder unkomprimiert (z.B. um Verfälschungen zu vermeiden) sein. Das jeweilige Bildformat kann auch den Farbraum definieren, gemäß dem die Farbinformationen angegeben sind.

Der einfachste Fall ist ein Binär-Farbraum, bei dem pro Pixel ein Schwarzweiß-Wert abgespeichert wird. Bei einem etwas komplexeren Farbraum (auch als Graustufen-Farbraum bezeichnet) werden Zwischenstufen zwischen Schwarz und Weiß abgespeichert (auch als Grauwerte bezeichnet). Der Farbraum kann aber auch von mehreren (z.B. zwei oder mehr) Grundfarben aufgespannt werden, wie beispielsweise rot, grün und blau. Sollen die Messwerte beispielsweise mehrfarbige Farbinformationen aufweisen, kann ein wellenlängensensitiver Bilderfassungssensor verwendet werden. Dessen Messwerte können beispielsweise gemäß einem Farbraum kodiert sein. Die Farbinformationen bzw. der zugrundeliegende Farbraum können daher mehrfarbig (auch als polychrom bezeichnet) oder auch einfarbig (auch als monochrom bezeichnet) sein. Die monochrome Farbinformationen kann beispielsweise nur Grauwerte aufweisen (dann auch als Grauwertinformationen bezeichnet) oder Schwarzweiß-Werte aufweisen (dann auch als Schwarzweißwertinformationen bezeichnet). Für eine visuelle Wiedergabe der Bilddaten auf einer Anzeigevorrichtung werden diese in dasjenige Bildformat überführt, das vom Bildspeicher der Grafikkarte vorgegeben ist. Die hierin beschriebenen Bilddaten werden zum einfacheren Verständnis als eine solche visuelle Wiedergabe dargestellt. Im Allgemeinen können die Bilddaten, z.B. abgelegt in einem Speichermedium, als Datei (auch als digitales Bild oder Bilddatei bezeichnet) in dem jeweiligen Bildformat vorliegen.

Die Bilddaten können optional (z.B. alternativ oder zusätzlich zu den Farbinformationen) Tiefeninformationen (auch als 3D-Informationen bezeichnet) aufweisen. Zum Erfassen der Tiefeninformationen kann eine sogenannte 3D-Kamera verwendet werden, wie später noch genauer beschrieben wird. Die Messwerte der 3D-Kamera können (z.B. pixelweise) Informationen zu einer Topografie der abgebildeten Realität (auch als Tiefeninformationen bezeichnet) aufweisen. Beispielsweise können die Tiefeninformationen angeben, welchen Abstand ein oder jedes Pixel der Kamera von einem Ort im Raum aufweist, der auf das Pixel abgebildet wird.

Die Tiefeninformationen können quantifiziert sein, z.B. unter Angabe der Tiefe als Wert, kodiert sein oder indirekt Teil der Bilddaten sein, z.B. wenn die Bilddaten mehrere gleichzeitig erfasste Perspektiven des Erfassungsraums (z.B. separat voneinander oder einander überlagert) aufweisen. Die mehreren gleichzeitig erfassten Perspektiven können beispielsweise einander überlagert werden, um die Tiefeninformationen zu quantifizieren. Der Wert der Tiefeninformationen kann dann beispielsweise zu einer Abweichung zwischen den mehreren gleichzeitig erfassten Perspektiven korrespondieren.

Durch eine 3D-basierte Segmentierung der Bilddaten und Klassifikation durch ein kNN kann das Auftreten von Händen und/oder anderen Objekten in mehreren (z.B. drei) Zonen des Erfassungsbereichs sehr effizient detektiert werden. So kann zum einen der Fall des Betrugs detektiert werden und zum anderen der Gesamtprozess auf Abweichungen vom Normalverhalten analysiert werden. Damit kann der gesamte Registriervorgang (auch als Checkout-Prozess bezeichnet) nach seiner Verdächtigkeit bewerten werden und optional ein Mitarbeiter informiert werden.

Des Weiteren ermöglicht die Aufnahme von Zeitverhalten an vielen Selbstbedienungskassen eine weitergehende Analyse und Optimierung des Prozesses (und der Kassen). Dabei kann die Position der Kamera derart eingerichtet sein, dass keine Überwachung des Kunden selbst erfolgt, sondern lediglich das zeitliche Verhalten seiner Artikelbewegungen. Auch müssen zu keinem Zeitpunkt (außer falls gewünscht) Bilddaten dauerhaft gespeichert werden, sondern diese können lediglich zur Analyse im flüchtigen Speicher verwendet werden.

Aufgrund der Vorverarbeitung der Bilddaten durch eine tiefenbasierte Segmentierung sowie eine gezielte Optimierung der Architektur des kNN auf die gegebene Problemstellung können im Vergleich zu herkömmlichen Mechanismen sehr hohe Erkennungsraten erreicht werden. Alternativ oder zusätzlich können aufgrund der Vorverarbeitung der Bilddaten durch eine tiefenbasierte Segmentierung sowie eine gezielte Optimierung der Architektur des kNN auf die gegebene Problemstellung im Vergleich zu herkömmlichen Mechanismen eine kosteneffektivere Hardware ermöglichen. Anschaulich ist weniger Rechenleistung nötig, um hohe Erkennungsraten zu erreichen.

Gemäß verschiedenen Ausführungsformen wurde erkannt, dass ein Farb- bzw. Helligkeit-basierter Bildsegmentierungsalgorithmus nur in einer kontrollierten und invarianten Umgebung eines SB-Registrierterminals zu guten Resultaten führen kann. Variieren allerdings die Lichtverhältnisse und/oder liegen reflektierende Oberflächen vor, führen diese zu unbrauchbaren Ergebnissen des Bildsegmentierungsalgorithmus. Ein Einlernen des Hintergrundes durch einen Klassifikator ist ebenfalls ausschließlich in einer kontrollierten und invarianten Umgebung realisierbar, so dass solche Mechanismen allein in der Praxis zu hohen Fehlerraten führen, die in einer sensiblen Anwendung wie einer Betrugsaufdeckung nicht akzeptabel sind.

Gemäß verschiedenen Ausführungsformen erfolgt daher eine gezielte Klassifikation der Bilddaten nach Händen, die Produkte in bzw. durch definierte Zonen bewegen. Dies bietet im Vergleich zu einer unmittelbaren Artikelerkennung deutlich niedrigere Fehlerraten. Des Weiteren sind die Algorithmen unabhängig vom Erscheinungsbild der Produkte und von Umgebungseinflüssen.

Gemäß verschiedenen Ausführungsformen erfolgt eine Verwendung einer 3D- und Farbbild-Kamera zur robusten Bildsegmentierung als Vorbearbeitung der Bilddaten und eine dieser Vorbearbeitung nachgelagerte Bildklassifikation (auch als Klassifizieren bezeichnet).

Optional kann der Registriervorgang alternativ oder zusätzlich zu der Verhinderung von Betrugsversuchen genutzt werden zur Analyse des Scan-Verhaltens, beispielsweise bezüglich einer Geschwindigkeit und/oder Effizienz, um Systeme dieser Art zukünftig in Hinblick auf Handling und Ergonomie zu optimieren.

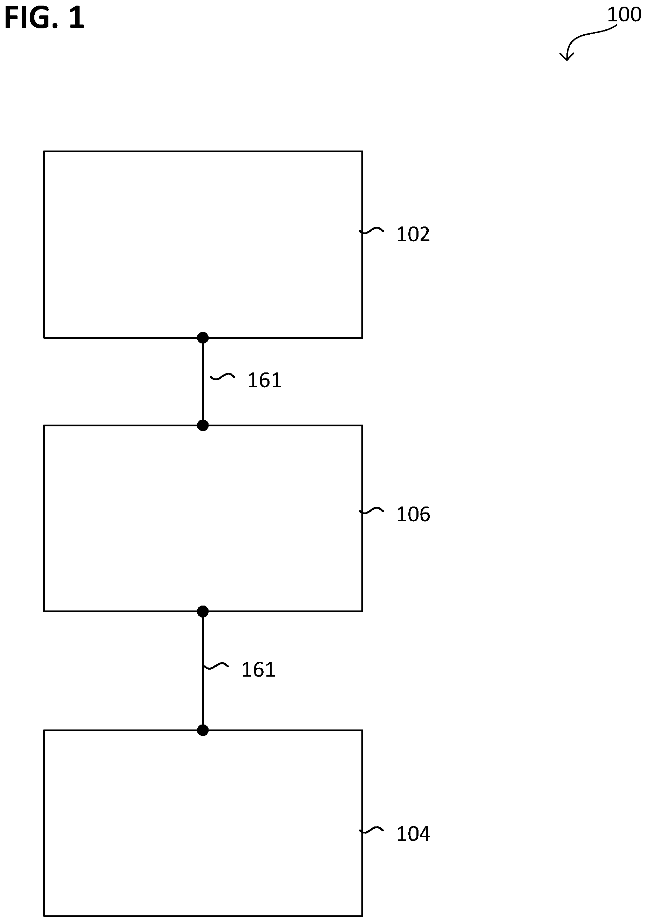

**Fig.1** veranschaulicht ein SB-Registrierterminal 100 gemäß verschiedenen Ausführungsformen in einem schematischen Aufbaudiagram. Das SB-Registrierterminal 100 kann eine Bilderfassungsvorrichtung 102, eine Produkterfassungsvorrichtung 104 und eine Steuervorrichtung 106 aufweisen. Die Steuervorrichtung 106 kann mit der Bilderfassungsvorrichtung 102 und der Produkterfassungsvorrichtung 104 kommunikativ 161 gekoppelt sein, z.B. mittels eines Feldbus-Kommunikationsnetzwerks 161.

Die Bilderfassungsvorrichtung 102 kann eingerichtet sein, der Steuervorrichtung 106 Bilddaten eines Erfassungsbereichs (z.B. im Rohdatenformat oder einer vorbearbeiteten Version des Rohdatenformats), z.B. pixelbasierte Bilddaten (auch als Rastergrafik bezeichnet), zuzuführen. Die Bilderfassungsvorrichtung 102 kann beispielsweise eine oder mehr als eine Kamera aufweisen, wie später noch genauer beschrieben wird.

Die Produkterfassungsvorrichtung 104 kann eingerichtet sein, der Steuervorrichtung 106 eine von ihr erfasste Produktkennung zuzuführen. Die Produktkennung kann beispielsweise einem Produkt oder dessen Typ eindeutig zugeordnet sein. Die Produktkennung kann beispielsweise auf Grundlage eines optischen Merkmals (auch als Kennungsmerkmal bezeichnet) des Produkts, welches erfasst wird, ermittelt werden. Das Kennungsmerkmal (z.B. ein Muster) kann einen visuellen Code aufweisen, der die Produktkennung repräsentiert, z.B. einen Binärcode oder Ähnliches. Beispielsweise kann das Kennungsmerkmal einen Barcode oder einen anderen maschinenlesbaren Code aufweisen.

Mittels der Produkterfassungsvorrichtung 104 kann ein produktweises Ermitteln der einzelnen Produktkennungen erfolgen (auch als Kennungserfassen bezeichnet). Der Bereich, in dem die Produkterfassungsvorrichtung 104 das Produkt erfassen kann, kann beispielsweise ein Teilbereich des Erfassungsbereichs (auch als Produkterfassungszone bezeichnet) sein. Das Kennungserfassen kann aufweisen, dass ein zu erfassendes des Produkt der Produkterfassungsvorrichtung 104 präsentiert wird. Das Präsentieren kann aufweisen, dass das zu erfassende Produkt in der Produkterfassungszone angeordnet wird und dessen Kennungsmerkmal in Richtung der Produkterfassungsvorrichtung 104 ausgerichtet wird.

Beispielsweise kann die Produkterfassungsvorrichtung 104 eine optische Erfassungsvorrichtung, eine RFID-Scanvorrichtung (Radiofrequenz-Identifikation) oder dergleichen aufweisen. Die optische Erfassungsvorrichtung kann beispielsweise eine Barcode-Scanvorrichtung oder eine Bildabtastvorrichtung aufweisen. Die Barcode-Scanvorrichtung kann entsprechende Sensoren zur Implementierung einer Scanfunktionalität beinhalten, wie beispielsweise einen oder mehr als einen Infrarotsensor, eine oder mehr als eine Kamera und dergleichen. Die Produkterfassungsvorrichtung 104 kann beispielsweise eingerichtet sein, den maschinenlesbaren Code zu erfassen und verarbeiten zu können, um daraus die Produktkennung zu extrahieren.

Die Produkterfassungsvorrichtung 104 und die Bilderfassungsvorrichtung 102 können eine entsprechende Infrastruktur (z.B. Prozessor, Speichermedium und/oder Bussystem aufweisend) oder dergleichen aufweisen, welche eine Messkette implementiert. Die Messkette kann eingerichtet sein, die entsprechenden Sensoren (z.B. Kamera, Scanner, usw.) anzusteuern, deren Messgröße als Eingangsgröße zu verarbeiten und darauf basierend die Bilddaten bzw. Produktkennung als Ausgangsgröße bereitzustellen.

Die Produkterfassungsvorrichtung 104, die Bilderfassungsvorrichtung 102 und die Steuervorrichtung 106 müssen nicht notwendigerweise dedizierte Infrastrukturen aufweisen. Beispielsweise können deren informationsverarbeitende Funktionen auch als Komponenten derselben Software (auch als Anwendung bezeichnet) bereitgestellt werden, die von einem oder mehr als einem Prozessor des SB-Registrierterminals 100 ausgeführt wird. Es können selbstverständlich auch mehrere Anwendungen und/oder mehrere Prozessoren verwendet werden, welche die informationsverarbeitenden Funktionen der Produkterfassungsvorrichtung 104, der Bilderfassungsvorrichtung 102 und der Steuervorrichtung 106 bereitstellen.

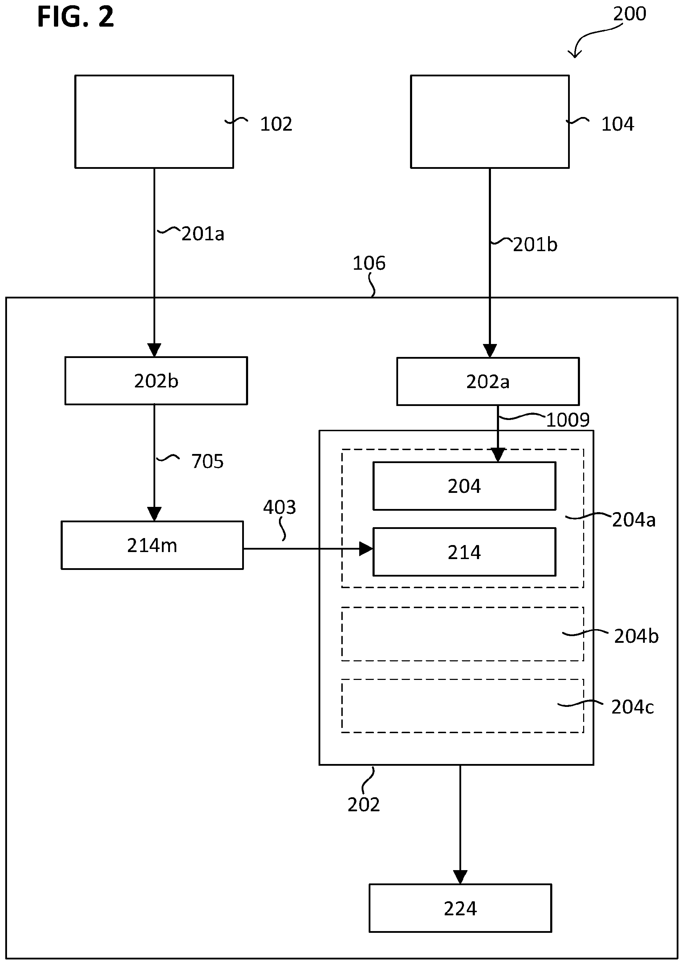

**Fig.2** veranschaulicht ein SB-Registrierterminal 200 gemäß verschiedenen Ausführungsformen in einem schematischen Kommunikationsdiagramm, z.B. eingerichtet wie das SB-Registrierterminal 100.

Die Bilderfassungsvorrichtung 102 kann eingerichtet sein, der Steuervorrichtung 106 die Bilddaten 202b des Erfassungsbereichs zuführen 201a (z.B. im Rohdatenformat oder einer vorbearbeiteten Version des Rohdatenformats), z.B. kontinuierlich als Sequenz. Die Produkterfassungsvorrichtung 104 kann eingerichtet sein, der Steuervorrichtung 106 eine erfasste Produktkennung 202a zuzuführen 201b.

Die Steuervorrichtung 106 kann eingerichtet sein zum Ermitteln 1009 von Zahlungsinformationen 204 basierend auf der Produktkennung 202a (auch als Zahlungsinformation-Ermitteln bezeichnet). Die Zahlungsinformationen 204 können anschaulich repräsentieren, welcher Preis für das entsprechende Produkt mit der Produktkennung 202a aufgerufen wird. Beispielsweise kann dazu die erfasste Produktkennung 202a mit einer Datenbank abgeglichen werden.

Beispielsweise kann die Steuervorrichtung 106 eingerichtet sein, eine Registriersitzung 202 zu starten, z.B. in Antwort auf ein ermitteltes Ereignis (auch als Sitzungsstartereignis bezeichnet), welches repräsentiert, dass eine Selbstbedienungsregistrierung erfolgen soll. Beispiele für das Sitzungsstartereignis können aufweisen, dass ein Nutzer vor dem SB-Registrierterminal 200 steht und/oder eine entsprechende Eingabe an diesem vornimmt, dass der Produkterfassungsvorrichtung 104 ein Produkt präsentiert wurde, und/oder dass eine vorherige Registriersitzung beendet wurde.

In ähnlicher Weise kann die Steuervorrichtung 106 eingerichtet sein, die Registriersitzung 202 zu beenden, z.B. in Antwort auf ein ermitteltes Ereignis (auch als Sitzungsendereignis bezeichnet), welches repräsentiert, dass eine Abrechnung der Selbstbedienungsregistrierung erfolgen soll. Beispiele für das Sitzungsendereignis können aufweisen, dass ein Nutzer eine entsprechende Eingabe an dem SB-Registrierterminal 200 vornimmt. Beispiele für das Sitzungsendereignis können aufweisen, dass eine Bankkarte oder ein anderes Zahlungsmittel von dem SB-Registrierterminal 100 erfasst wurde, und/oder dass ein vordefinierter Zeitraum abgelaufen ist, seit dem das letzte Produkt erfasst wurde.

Zum Beenden der Registriersitzung 202 kann die Steuervorrichtung 106 eingerichtet sein, eine Abrechnungsinformation 224 zu ermitteln und mittels einer Anzeigevorrichtung des SB-Registrierterminals 200 anzuzeigen. Die während einer Registriersitzung 202 ermittelten Zahlungsinformationen 204 können beispielsweise aggregiert werden und das Ergebnis des Aggregierens der Abrechnungsinformation 224 hinzugefügt werden. Die Abrechnungsinformation 224 kann anschaulich angeben, welche zu zahlende Summe die registrierten Produkte ergeben. Die Abrechnungsinformation 224 kann optional weitere Informationen aufweisen, wie beispielsweise der Anteil an Steuern, eine Liste der erfassten Produkte, eine Einzelaufstellung der erfassten Produkte, oder Ähnliches.

Die Steuervorrichtung 106 kann eingerichtet sein, basierend auf den Bilddaten 202b ein Bewegungsmuster 214m zu ermitteln. Das Bewegungsmuster 214m kann eine Bewegung eines Objektes (z.B. eines Produktes und/oder einer Hand) in dem Erfassungsbereich repräsentieren, wie später noch genauer beschrieben wird. Die Steuervorrichtung 106 kann ferner eingerichtet sein, eine Angabe 214 über eine Vertrauenswürdigkeit (auch als Unbedenklichkeitsangabe 214 bezeichnet) der Zahlungsinformationen 204 basierend auf dem Bewegungsmuster 214m zu ermitteln 403, wie später noch genauer beschrieben wird.

In einer wenig komplexen Implementierung kann die Unbedenklichkeitsangabe 214 einen quantifizierten bzw. quantifizierbaren Parameter aufweisen, z.B. einen Wert aus einem Werteintervall aufweisen, wobei das untere Ende des Werteintervalls eine geringe Vertrauenswürdigkeit und das obere Ende des Werteintervalls eine hohe Vertrauenswürdigkeit repräsentiert oder andersherum. Alternativ oder zusätzlich kann die Unbedenklichkeitsangabe 214 als Parameter eine Klasse (auch als Verdächtigkeitslevel bezeichnet) ausgewählt aus mehreren Klassen (auch als Bedenklichkeitsklassen bezeichnet) aufweisen. Die mehreren Bedenklichkeitsklassen können beispielsweise eine erste Klasse "Unbedenklich", eine zweite Klasse "Bedenklich" und optional zusätzliche Klassen, wie beispielsweise Abstufungen dazwischen, aufweisen. Es können selbstverständlich auch andere Typen von Parametern verwendet werden. Der jeweils verwendete Typ des Parameters kann selbstverständlich an die jeweilige Anwendung spezifisch angepasst sein oder werden. Optional kann die Unbedenklichkeitsangabe 214 zusätzliche Parameter aufweisen, wie beispielsweise eine Information über eine Verlässlichkeit oder über einen möglichen Messfehler. Mehrere Parameter der Unbedenklichkeitsangabe 214 können beispielsweise als Komponenten eines Vektors verarbeitet werden. Allgemeiner können die Parameter der Unbedenklichkeitsangabe 214 als beliebig formulierter Parametersatz verarbeitet werden.

Die oder jede Unbedenklichkeitsangabe 214 kann beispielsweise (z.B. genau) einer Zahlungsinformationen 204 eines Produkts zugeordnet sein, so dass Paare 204a, 204b, 204c aus Zahlungsinformation 204 eines Produkts und diesem zugeordneter Unbedenklichkeitsangabe gebildet werden. Somit kann beispielsweise eine produktweise aufgelöste Angabe über die Vertrauenswürdigkeit bereitgestellt werden. Beispielsweise können die jeweiligen Produkte ermittelt werden, deren Unbedenklichkeitsangaben ein Kriterium erfüllen, wobei das Kriterium repräsentiert, dass die Vertrauenswürdigkeit akzeptabel ist. Dies ermöglicht es beispielsweise, zu berücksichtigen, wenn sich Produkte in der benötigten Vertrauenswürdigkeit voneinander unterscheiden und/oder diese zu gewichten. In diesem Fall können beispielsweise jeweils einzeln den Produkten zugeordnete Kriterien verwendet werden. Beispielsweise kann eine statistische Größe auf Grundlage der Unbedenklichkeitsangaben 214 ermittelt werden, z.B. ein Mittelwert, eine Schwankung oder eine Anzahl an Unbedenklichkeitsangaben 214, die das Kriterium erfüllen. Die statistische Größe ermöglicht beispielsweise weitere Informationen zu erhalten bezüglich der Unbedenklichkeit der gesamten Registriersitzung 202. Beispielsweise kann die Wichtung der Unbedenklichkeitsangaben 214 erfolgen basierend auf dem jeweils zugeordneten Produkt oder dessen Typ.

Die Unbedenklichkeitsangaben 214 müssen allerdings nicht notwendigerweise produktweise zugeordnet und/oder gespeichert werden. Mehrere Unbedenklichkeitsangaben 214 einer Registriersitzung 202 können beispielsweise auch ungeordnet zusammengeführt (z.B. aufsummiert) werden. Das Ergebnis des Zusammenführens ermöglicht es beispielsweise, weitere Informationen zu erhalten bezüglich der Unbedenklichkeit der gesamten Registriersitzung 202. Optional kann auch hier eine Wichtung der Unbedenklichkeitsangaben 214 erfolgen.

Es kann selbstverständlich auch eine einzige Unbedenklichkeitsangabe 214 ermittelt werden, welche die gesamten Registriersitzung 202 repräsentiert, z.B. auf Grundlage einer Vielzahl von Bewegungsmustern, die während der Registriersitzung 202 ermittelt wurden.

Es können selbstverständlich auch stichprobenartig Unbedenklichkeitsangaben 214 ermittelt werden.

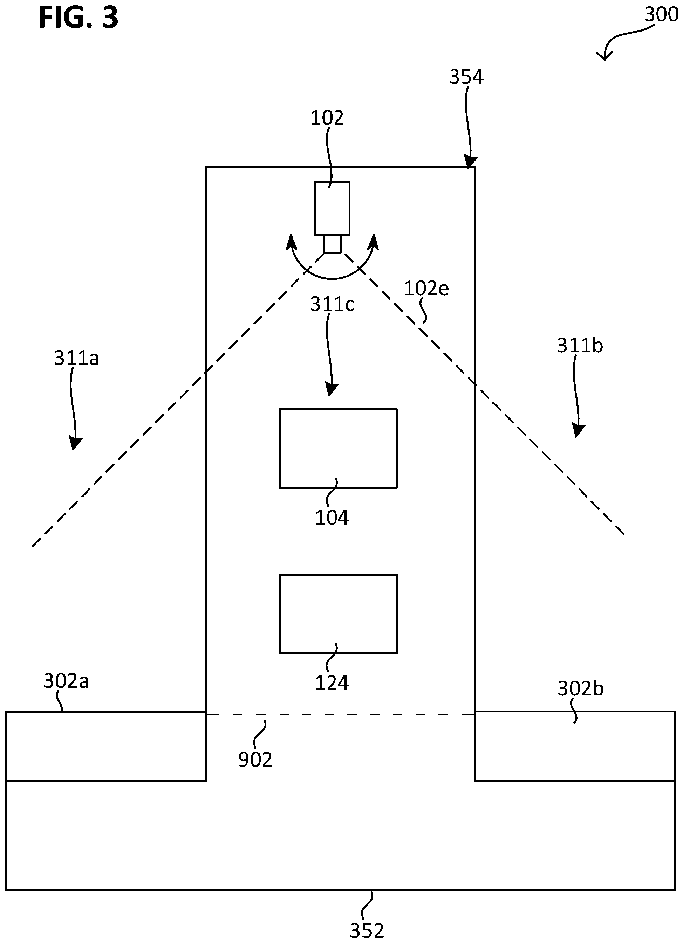

**Fig.3** veranschaulicht ein SB-Registrierterminal 300 gemäß verschiedenen Ausführungsformen in einer schematischen Seitenansicht, z.B. eingerichtet wie das SB-Registrierterminal 100 oder 200.

Im Allgemeinen kann das SB-Registrierterminal 300 ein Tragwerk 352 aufweisen, mittels welcher verschiedenen Komponenten des SB-Registrierterminals 300 getragen werden, beispielsweise eine oder mehr als eine Ablagevorrichtung 302a, 302b, die Bilderfassungsvorrichtung 102, die Produkterfassungsvorrichtung 104, die Steuervorrichtung (nicht dargestellt), usw. Das Tragwerk 352 kann beispielsweise ein Gestell und ein daran befestigtes Gehäuse aufweisen, wobei das Gehäuse die sensiblen Komponenten des SB-Registrierterminals 300 einhaust. Das Tragwerk 352 kann beispielsweise eine Basis aufweisen, mit welcher das Tragwerk 352 auf einem Untergrund steht und einen vertikal erstreckten Abschnitt 354 (anschaulich auch als Säule bezeichnet), welcher die erhöht angebrachten Komponenten, z.B. die Bilderfassungsvorrichtung 102 und die Produkterfassungsvorrichtung 104, trägt.

Die Bilderfassungsvorrichtung 102 kann eingerichtet sein, Bilddaten des Erfassungsbereichs 102e zu erfassen. Dazu kann die Bilderfassungsvorrichtung 102 eine oder mehr als eine Kamera aufweisen. Beispielsweise kann die Bilderfassungsvorrichtung 102 eingerichtet sein, Bilddaten zu erzeugen, die Tiefeninformationen des Erfassungsbereichs 102e aufweisen.

Zum Ermitteln der Tiefeninformationen kann die Bilderfassungsvorrichtung 102 beispielsweise eine oder mehr als eine 3D-Kamera aufweisen (auch als 3-Dimension-Kamera bezeichnet). Eine 3D-Kamera kann im Allgemeinen eingerichtet sein, Bilddaten zu erfassen, welche die Tiefeninformationen aufweisen.

Beispiele für eine 3D-Kamera weisen auf: eine plenoptische Kamera (auch als Lichtfeldkamera bezeichnet), eine stereoskopische Kamera (kurz auch als Stereokamera bezeichnet), eine Kamera mit Triangulationssystem, eine TOF-Kamera (Laufzeit-Kamera), eine Kamera mit Interferenzsystem. Eine Stereokamera ist hierbei eine besonders kostengünstige 3D-Kamera, welche leichter zu implementieren ist. Ebenso ist eine Stereokamera robuster gegenüber reflektierenden Oberflächen und benötigt keinen Laser, was das Gesundheitsrisiko für Personen im öffentlichen Raum reduziert.

Die TOF-Kamera kann beispielsweise eingerichtet sein, den Erfassungsbereich 102e mittels eines Lichtpulses auszuleuchten und für jeden Bildpunkt eine Zeit (die sogenannte Laufzeit) zu erfassen, welche der Lichtpuls wieder zurück braucht. Im Allgemeinen kann allerdings auch ein Signal anderen Typs (z.B. Schall) verwendet werden, um eine räumliche Verteilung der Laufzeit des Signals zu messen (z.B. ein Ultraschall-Laufzeitverfahren). Dies ermöglicht es, eine noch einfacher aufgebaute Kamera zu verwenden oder im Vergleich zu einem Lichtpuls eine größere Bildauflösung bereitzustellen.

Es kann alternativ oder zusätzlich auch ein anderer Mechanismus verwendet werden, um die Tiefeninformationen bereitzustellen. Beispielsweise kann die Bilderfassungsvorrichtung 102 eingerichtet sein, einen variablen Fokus (Autofokus) zum Ermitteln der Tiefeninformationen zu verwenden. Der Fokus kann allerdings auch auf ein bewegliches Objekt (z.B. Produkt und/oder Hand) gerichtet werden, so dass anhand der Fokusposition der Abstand zwischen der Bilderfassungsvorrichtung 102 und dem Objekt als Tiefeninformation ermittelt werden kann. Alternativ oder zusätzlich kann das Ermitteln der Tiefeninformationen auf Grundlage einer Kantenkontrastmessung und/oder eines Phasenvergleichs erfolgen.

Der Erfassungsbereich 102e kann mehrere Teilbereiche (auch als Zonen bezeichnet) aufweisen. Die mehreren Zonen können beispielsweise eine erste Zone 311a (auch als Eingabezone 311a bezeichnet) aufweisen, in welcher eine erste Ablagevorrichtung 302a des SB-Registrierterminals 300 angeordnet ist. Die mehreren Zonen können beispielsweise eine zweite Zone 311b (auch als Ablagezone 311b bezeichnet) aufweisen, in welcher eine zweite Ablagevorrichtung 302b des SB-Registrierterminals 300 angeordnet ist. Die mehreren Zonen können beispielsweise die Produkterfassungszone als dritte Zone 311c (auch als Scanzone 311c bezeichnet) aufweisen. Allgemeiner können die Zonen eine Ablageebene (z.B. einen Kassentisch) als Referenzebene 902 aufweisen, auf welcher die Produkte abgelegt und/oder über diese hinweg bewegt werden können, wie später noch genauer beschrieben wird.

Die oder jede Ablagevorrichtung 302b, 302a kann derart eingerichtet sein, dass auf dieser ein oder mehr als ein Produkt abgelegt werden kann. Dazu kann eine Ablagevorrichtung 302b, 302a beispielsweise ein Ablageregal, einen Ablagehaken für Taschen und/oder einen Ablagetisch aufweisen. Optional kann die oder jede Ablagevorrichtung 302b, 302a eine Waage aufweisen, welche eingerichtet ist, ein Gewicht der auf der Ablagevorrichtung abgelegten Produkte zu erfassen.

Beispielsweise können drei wesentliche Zonen des Produktumschlags an dem SB-Registrierterminal 300 mittels einer 3D-Kamera überwacht werden: ein Ablageort 311a für noch nicht erfasste (z.B. gescannte) Produkte, die Produkterfassungszone 311c (z.B. Scanzone), d.h. der Teilbereich während des Scannens, und ein Ablageort 311b für gescannte Produkte.

Optional kann das SB-Registrierterminal 300 eine Informationsausgabevorrichtung 124 aufweisen, wie später noch genauer beschrieben wird. Die Informationsausgabevorrichtung 124 kann beispielsweise eingerichtet sein, eine vom Menschen wahrnehmbare (z.B. hörbare oder sichtbare) Information auszugeben, z.B. mittels einer Anzeigevorrichtung. Die Information kann beispielsweise eine Aufforderung und/oder eine Hilfestellung für den Benutzer aufweisen.

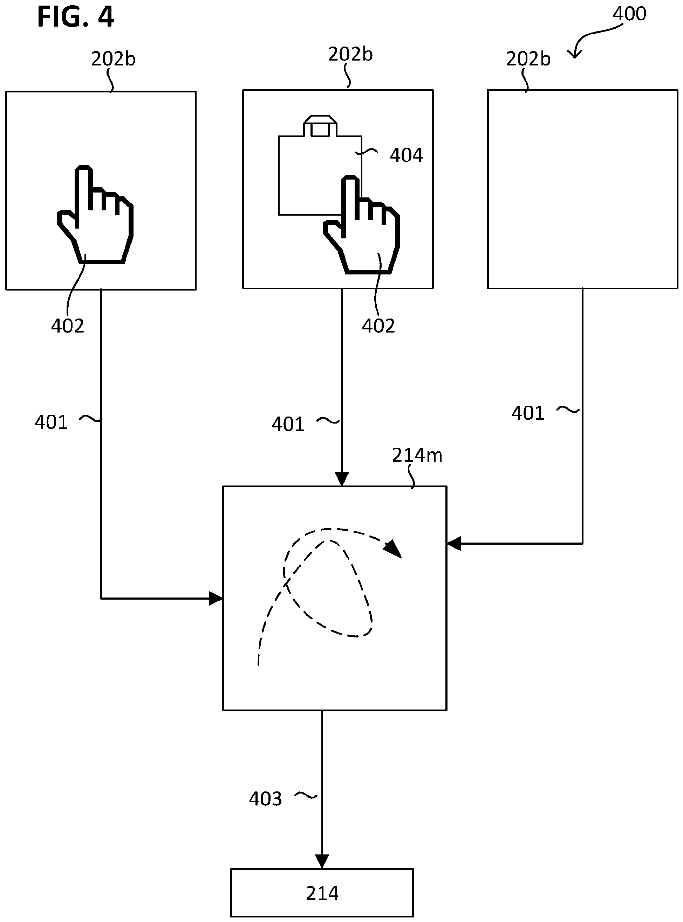

**Fig.4** veranschaulicht ein Verfahren 400 gemäß verschiedenen Ausführungsformen in einem schematischen Ablaufdiagramm, z.B. mittels der Steuervorrichtung 106 eines der SB-Registrierterminals 100 bis 300 implementiert.

Das Verfahren 400 kann aufweisen, das Bewegungsmuster 214m zu ermitteln 401, und auf dessen Grundlage die Unbedenklichkeitsangabe 214 zu ermitteln.

Im Allgemeinen kann das Bewegungsmuster 214m eine Bewegung, d.h. eine räumliche Veränderung einer Lage (d.h. des Ortes und/oder der Ausrichtung) eines Objektes repräsentieren, z.B. eines Produktes und/oder einer Hand. Mit anderen Worten kann die Bewegung eine Drehung des Objektes und/oder einer Verschiebung des Objektes aufweisen. Das Bewegungsmuster kann in einer weniger komplexen Implementierung die Veränderung der Anwesenheit des Objektes, welche von der Bewegung bewirkt wird, repräsentieren. Dasselbe kann für mehrere Objekte unterschiedlichen Typs gelten, z.B. für eine Hand 402 und/oder für ein Produkt 404.

Dazu können Bilddaten 202b des Erfassungsbereich 102e, z.B. einer oder mehr als einer seiner Zonen, verarbeitet werden, welche ein oder mehr als ein Objekt aufweisen, z.B. die Hand 402 und/oder das Produkt 404, oder aber kein Objekt (auch als leer bezeichnet). Im Allgemeinen kann das Bewegungsmuster 214m eine Aneinanderreihung von Knoten aufweisen, welche das Muster der Bewegung definieren. Die Knoten können optional parametrisiert sein, zum Beispiel mittels einer oder mehr als einer der folgenden Eigenschaften: Art des Objektes; Lage des Objektes vor, während und/oder nach der Bewegung, Geschwindigkeit der Bewegung; Beschleunigung der Bewegung; Ort der Bewegung, Zeitpunkt der Bewegung; Richtung der Bewegung; Anzahl der Objekte; usw. Die Lage des Objektes kann beispielsweise die Zone angeben, in der die Bewegung beginnt, erfolgt oder endet.

In einem leicht verständlichen Beispiel einer Anwesenheitssequenz kann die Bewegung stückweise mittels diskreter Anwesenheitszustände als Knoten nachgebildet werden. Die Knoten geben dann beispielsweise an, ob oder welches Objekt (z.B. Hand und/oder Produkt) anwesend ist. Eine solche Anwesenheitssequenz kann beispielsweise als Knoten aufweisen: [leer], [Produkt mit Hand], [Produkt].

In einem anderen leicht verständlichen Beispiel einer Trajektorie kann die Bewegung stückweise mittels Polynomen oder Bewegungsrichtungen nachgebildet sein oder werden. Die Stellen der Trajektorie, an denen zwei Polynome bzw. Bewegungsrichtungen aneinandergrenzen können die sogenannten Knoten der Trajektorie bilden. Die Knoten der Trajektorie können beispielsweise in einem mehrdimensionalen Koordinatensystem angegeben sein, z.B. mittels räumlicher Vektoren. Eine solche Anwesenheitssequenz kann beispielsweise als Knoten aufweisen: [x₁, y₁, z₁], [x₂, y₂, z₂], [x₃, y₃, z₃], wobei xₙ, yₙ, zₙ Koordinaten sind. Optional können die Polynome bzw. Bewegungsrichtungen weggelassen werden und nur die diskreten Lagen des Objektes als Knoten verwendet werden, ohne diese zu verbinden.

Die Knoten können optional zonenweise ermittelt werden, beispielsweise ein oder mehr als ein erster Knoten für die erste Zone 311a, ein oder mehr als ein zweiter Knoten für die zweite Zone 311b und/oder ein oder mehr als ein dritter Knoten für die dritte Zone 311c. So können komplexere Bewegungen repräsentiert werden.

In einem anderen leicht verständlichen Beispiel kann die Trajektorie die Art des Objekts angeben und (z.B. zonenweise) eine Sequenz der Anwesenheit des Objekts. Eine solche Anwesenheitssequenz kann beispielsweise als Knoten aufweisen: [Typ des Objekts = Produkt], [Zone 1], [Zone 2], [Zone 3].

Die Trajektorie kann zwar eine sehr detaillierte Repräsentation der Bewegung bereitstellen allerdings auch einen großen Rechenaufwand erfordern. Daher kann auch (z.B. alternativ aber auch zusätzlich zu der Trajektorie) die weniger komplexe Anwesenheitssequenz verwendet werden, welche im Folgenden exemplarisch näher erläutert wird. Das Bewegungsmuster 214m kann im Allgemeinen auch anders formuliert werden, z.B. rein formal oder mittels technischphysikalischer Parameter. Das für die Anwesenheitssequenz Beschriebene kann in Analogie auch für jedes anders formulierte Bewegungsmuster 214m gelten.

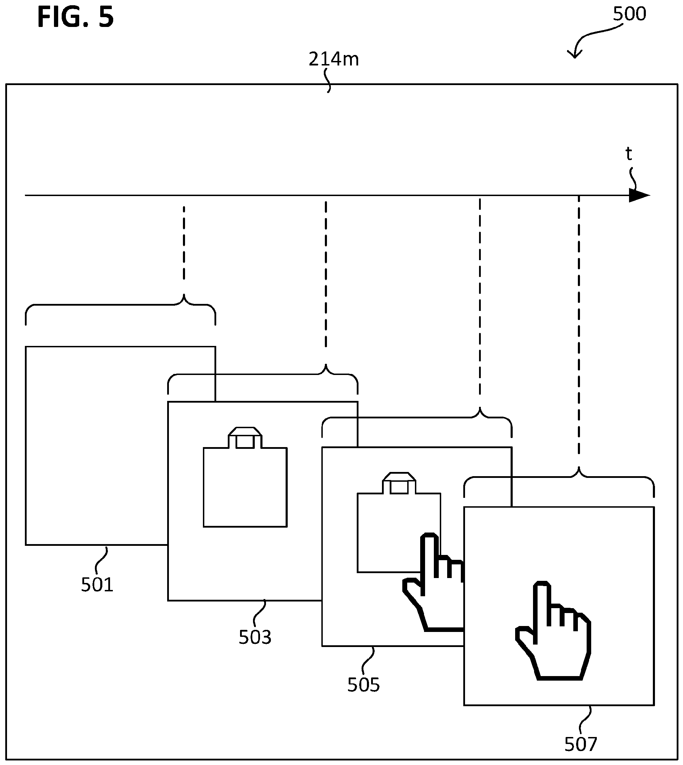

**Fig.5** veranschaulicht ein Bewegungsmuster 214m gemäß verschiedenen Ausführungsformen in einem schematischen Diagramm 500, z.B. gemäß dem Verfahren 400 und/oder mittels der Steuervorrichtung 106 eines der SB-Registrierterminals 100 bis 300 implementiert.

In 500 kann das Bewegungsmuster 214m einen zeitlichen Ablauf (auch als Zeitablauf oder Sequenz bezeichnet) der Anwesenheit eines oder mehr als eines Objekts als Anwesenheitssequenz aufweisen. Die Anwesenheitssequenz kann konkrete Zeitpunkte (z.B. eine Uhrzeit) der Anwesenheit aufweisen oder auch nur chronologisch geordnet sein. Die Anwesenheitssequenz kann beispielsweise eine chronologisch geordnete Aneinanderreihung von Anwesenheitszuständen als Knoten 501, 503, 505, 507 aufweisen. Die Anwesenheitszustände können optional parametrisiert sein, zum Beispiel mittels einer Dauer der Anwesenheit und/oder der Zone. Die Anwesenheitssequenz kann beispielsweise zonenweise ermittelt werden, beispielsweise eine erste Anwesenheitssequenz für die erste Zone 311a, eine zweite Anwesenheitssequenz für die zweite Zone 311b und/oder eine dritte Anwesenheitssequenz für die dritte Zone 311c.

Ein solches beispielhaftes Bewegungsmuster 214m kann bezüglich einer Zone (z.B. der ersten, zweiten und/oder dritten Zone) aufweisen, dass kein Objekt in der Zone angeordnet ist in 501, nur ein Produkt in der Zone angeordnet ist in 503, ein Produkt und eine Hand in der Zone angeordnet sind in 505, oder nur eine Hand in der Zone angeordnet ist in 507.

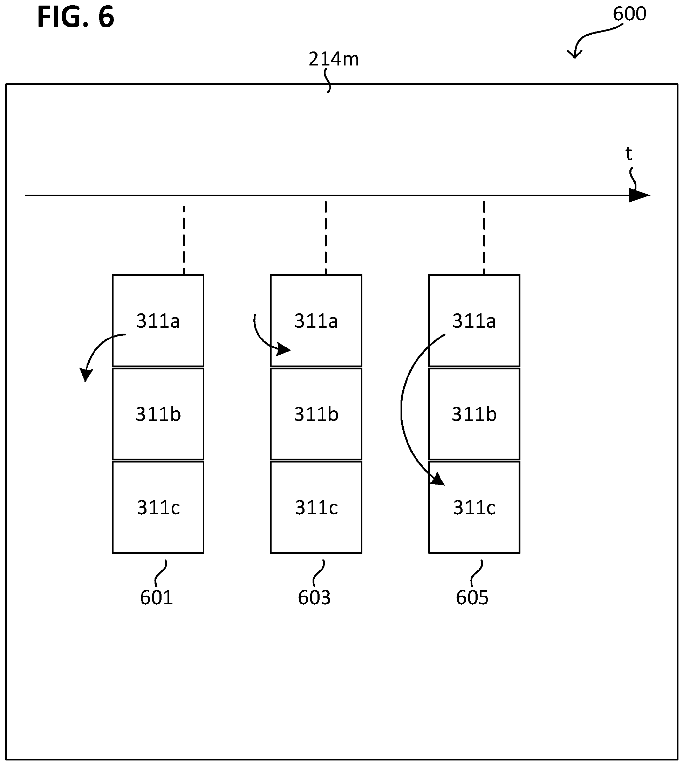

**Fig.6** veranschaulicht ein Bewegungsmuster 214m gemäß verschiedenen Ausführungsformen in einem schematischen Diagramm 600, z.B. gemäß dem Verfahren 400 und/oder mittels der Steuervorrichtung 106 eines der SB-Registrierterminals 100 bis 300 implementiert.

In 600 können die Anwesenheitszustände des Bewegungsmusters 214m mittels eines räumlichen Wechsels eines Objektes (z.B. Hand und/oder Produkt) zwischen den Zonen des Erfassungsbereichs 102e als Knoten 601, 603, 605 repräsentiert werden. Die Anwesenheitssequenz kann konkrete Zeitpunkte (z.B. eine Uhrzeit) der Wechsel aufweisen oder auch nur chronologisch geordnet sein. Die Knoten 601, 603, 605 können optional parametrisiert sein, zum Beispiel mittels einer oder mehr als einer der folgenden Eigenschaften: Dauer der Anwesenheit, Richtung des Wechsels, Typ des Objekts (d.h. Art des Objekts).

Beispiele für ein solches Bewegungsmuster 214m können beispielsweise bezüglich einer Zone (z.B. der ersten, zweiten und/oder dritten Zone) aufweisen, dass das Objekt die Zone verlässt in 601, hineintritt in die Zone 311b in 603, und/oder zwischen zwei Zonen bewegt wurde in 605. In einer anderen Art der Formulierung kann das Bewegungsmuster 214m beispielsweise die zonenweisen Ereignisse in kodierter Form angeben, beispielsweise mittels eines Semaphors kodiert, wie später noch genauer beschrieben wird.

Die vorstehenden Möglichkeiten für das Bewegungsmuster 214m können selbstverständlich auch miteinander kombiniert werden, um genauere Angaben über die Bewegung zu machen. Im Folgenden wird sich auf den einfach verständlichen zeitlichen Ablauf der Anwesenheit eines oder mehr als eines Objekts als Anwesenheitssequenz bezogen. Das Beschriebene kann in Analogie auch für ein anders formuliertes Bewegungsmuster 214m gelten.

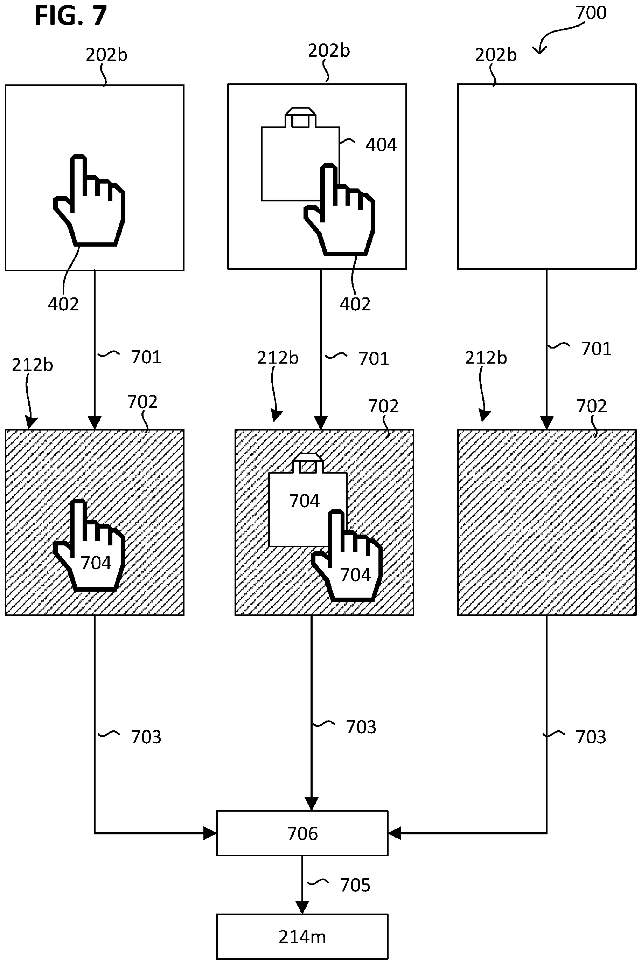

**Fig.7** veranschaulicht das Ermitteln 401 des Bewegungsmusters 214m gemäß verschiedenen Ausführungsformen in einem schematischen Ablaufdiagramm 700, z.B. gemäß dem Verfahren 400 und/oder mittels der Steuervorrichtung 106 eines der SB-Registrierterminals 100 bis 300 implementiert.

In 701 können Datenbestandteile aus den Bilddaten 202b herausgefiltert werden, welche den unbeweglichen (invarianten) Hintergrund des Erfassungsbereichs 102e repräsentieren (auch als Objektfiltern oder allgemeiner als Freistellen bezeichnet). Zum Objektfiltern kann beispielsweise eine Filtermaske (vereinfacht auch als Maske bezeichnet) verwendet werden.

Eine Filtermaske kann beispielsweise einen Grafikfilter aufweisen und eine Segmentierungsmaske. Die Segmentierungsmaske kann anschaulich (z.B. pixelweise) angeben, z.B. mittels eines Helligkeitswerts, auf welche Datensegmente (z.B. Pixel) der Bilddaten 202b der Grafikfilter angewendet werden sollen bzw. vor einer Anwendung des Grafikfilters geschützt werden sollen. Beispielsweise können helle Bereiche der Segmentierungsmaske repräsentieren, dass die Anwendung des Grafikfilters erfolgen soll und dunkle Bereiche angeben, dass keine Anwendung des Grafikfilters erfolgen soll, oder andersherum. Es können selbstverständlich auch Abstufungen zwischen hell und dunkel verwendet werden, um eine teilweise Anwendung des Grafikfilters und/oder einen Übergang zu erreichen. Die Anwendung des Grafikfilters kann beispielsweise aufweisen, die Farbinformation 914 zu verändern, z.B. abzudunkeln (z.B. mittels eines Schwarzfilters), zu ersetzen (z.B. mittels einer Ersetzenfilters) oder zu entfernen (z.B. mittels eines Entfernenfilters). Die Maske kann dieselben pixelbezogenen Abmessungen aufweisen, wie die Farbinformationen.

Die Maske kann den Farbinformationen überlagert werden, so dass das Freistellen 701 erfolgt. Die Segmentierungsmaske kann beispielsweise als Zwischenschritt auf einen entsprechenden Grafikfilter angewendet werden, so dass ein selektives Anwenden des Grafikfilters auf die Farbinformationen 914 erreicht wird. Als Resultat des Freistellens 701 werden die gefilterten Bilddaten 212b erhalten, welche die gemäß den Tiefeninformationen freigestellten beweglichen Objekte in dem Erfassungsbereich 102e aufweisen.

Als Ergebnis des Herausfilterns können zusätzliche Bilddaten 212b (auch als gefilterte Bilddaten 212b bezeichnet) bereitgestellt werden, in denen zumindest ein oder mehr als ein bewegliches Objekt in dem Erfassungsbereich (oder einer Zone) freigestellt ist. Das Freistellen 701 kann beispielsweise aufweisen, ein Bilddatensegment (kurz auch als Datensegment bezeichnet), welches den Hintergrund des Erfassungsbereichs 102e repräsentiert, zu maskieren und/oder zu verwerfen (z.B. nicht beim Ermitteln des Bewegungsmusters weiterzuverwenden).

Das Freistellen 701 kann beispielsweise aufweisen, die Tiefeninformationen auf die Maske abzubilden, gemäß welcher die Bilddaten maskiert werden. Das Abbilden kann beispielsweise mittels einer Funktion erfolgen, welche nicht notwendigerweise stetig sein muss. Eine unstetige Funktion kann beispielsweise einen scharfen Übergang zwischen dem Anwenden des Grafikfilters und dem Schützen vor dessen Anwendung bereitstellen.

In 701 kann das Freistellen anschaulich mittels Bearbeitens der Bilddaten 202b erfolgen. Alternativ oder zusätzlich dazu kann das Freistellen 701 allerdings auch fokal erfolgen, z.B. indem eine geringe Schärfentiefe bzw. große Tiefenunschärfe beim Erfassen der Bilddaten verwendet wird. Dies erreicht, dass der Hintergrund des Erfassungsbereichs 102e unscharf abgebildet wird, wenn auf das Objekt fokussiert wird. In diesem Fall können die Bilddaten 202b bereits das eine oder mehr als das eine freigestellte Objekt aufweisen. Zum fokalen Freistellen kann eine Bilderfassungsvorrichtung verwendet werden, welche eine geringe Schärfentiefe bereitstellt (z.B. von wenigen Zentimetern). Eine geringe Schärfentiefe kann beispielsweise mit einem großen Bildsensor (z.B. mehr als 2,5 cm) und/oder einer geringen Blendenzahl (z.B. kleiner als 2) bereitgestellt werden. Allgemeiner gesprochen kann die hyperfokale Entfernung der Bilderfassungsvorrichtung 102 größer sein als der Abstand dieser zum Objekt oder zur Referenzebene. Beispielsweise kann der Bildsensor eine diagonale Ausdehnung aufweisen, die größer ist als die Schärfentiefe. Im Folgenden wird sich auf die bearbeiteten Bilddaten bezogen. Das Beschriebene kann in Analogie für optisch freigestellte Bilddaten gelten.

Gemäß verschiedenen Ausführungsformen können die Tiefeninformation zum Freistellen der beweglichen oberhalb der Referenzebene angeordneten Objekte verwendet werden. Die Tiefeninformation kann wiederum durch eine stereoskopische Kamera ermittelt werden. Diese bestimmt die Entfernung (anschaulich Tiefe) bestimmter Bildbereiche über die Disparität der verschiedenen Perspektiven der stereoskopischen Kamera. Die Schärfentiefe der stereoskopischen Kamera kann, muss aber nicht notwendigerweise verwendet werden.

Im Zusammenhang mit einer Stereokamera bzw. dem Ermitteln von Tiefeninformationen bezeichnet die Disparität (auch als Deviation bezeichnet) einen Versatz in der Position, den das gleiche Objekt in der Abbildung aus zwei unterschiedlichen Perspektiven einnimmt. Die den Perspektiven zugehörigen Brennpunkte der beiden Objektive weisen einen Abstand b zueinander auf. Haben beide Objektive die Brennweite f gilt für den Abstand r des Objekts von den Objektiven (auch als Tiefe bezeichnet) r = b · f/d, wobei d die Disparität bezeichnet. Damit kann die Tiefeninformation r eines Objekts auf Grundlage einer ermittelten Disparität des Objekts im Stereobild ermittelt werden. Eine Disparitätenkarte eines Stereobildes ist somit gleichbedeutend zu einem Tiefenbild, das die räumliche Verteilung der Tiefeninformation angibt. Die Disparitätenkarte kann beispielsweise mittels einer Census-Transformation ermittelt werden.

Im Allgemeinen kann das Freistellen ganz oder teilweise erfolgen. Das Freistellen kann zufolge haben, dass der Kontrast und/oder die Abbildungsschärfe derjenigen Datenbestandteile der Bilddaten, welche den Hintergrund repräsentieren, verringert werden.

In einem leicht verständlichen Beispiel für das Freistellen werden die Bilddaten 202b in Datensegmente unterteilt (auch als Segmentieren bezeichnet). Beispielsweise kann ein erstes Datensegment 702 (schraffiert dargestellt) ermittelt werden, welches einen leeren Erfassungsbereich 102e (bzw. dessen Zone) repräsentiert. Mit anderen Worten kann das erste Datensegment 702 die Umgebung repräsentieren. Ferner kann ein zweites Datensegment 704 (auch als Objektdatensegment bezeichnet) ermittelt werden, welches ein oder mehr als ein bewegliches Objekt (z.B. die Hand und/oder das Produkt) in dem Erfassungsbereich 102e (bzw. dessen Zone) repräsentiert. Das erste Datensegment 702 (auch als Umgebungsdatensegment bezeichnet) kann beispielsweise verworfen, geschwärzt oder anderweitig maskiert werden.

Das Freistellen kann beispielsweise unter Verwendung der Tiefeninformationen erfolgen (dann auch als Tiefenfiltern bezeichnet). Die Tiefeninformationen können beispielsweise pixelweise eine Tiefe angeben, z.B. einen Abstand von der Bilderfassungsvorrichtung 102 oder einem anderen Referenzobjekt 902 (z.B. der Referenzebene 902). Beispielsweise können diejenigen Datenbestandteile, welche eine große Tiefe aufweisen, herausgefiltert 701 werden. Alternativ oder zusätzlich können diejenigen Datenbestandteile, welche eine geringe Tiefe aufweisen, von dem Herausfiltern 701 geschützt werden. Das Tiefenfiltern ist unempfindlicher gegenüber der vorherrschenden Lichtsituation, gegenüber Reflexionen, oder anderen Störungen in dem Erfassungsbereich 102e. Allgemeiner gesprochen kann das Tiefenfiltern aufweisen, die Tiefeninformationen und die Farbinformationen der Bilddaten einander zu überlagern, so dass diejenigen Datenbestandteile, welche eine große Tiefe aufweisen, herausgefiltert 701 werden.

Alternativ oder zusätzlich zu dem Tiefenfiltern kann das Freistellen unter Verwendung der Bilddaten des leeren Erfassungsbereichs erfolgen (auch als Vergleichsfiltern bezeichnet). Beispielsweise können diejenigen Datenbestandteile herausgefiltert werden, welche mit den Bilddaten des leeren Erfassungsbereichs übereinstimmen.

Alternativ oder zusätzlich zu dem Tiefenfiltern und/oder dem Vergleichsfiltern kann das Freistellen unter Verwendung der Farbinformationen der Bilddaten erfolgen (auch als Farbfiltern bezeichnet), beispielsweise der RGB-Informationen (Rot-Gelb-Blau-Informationen). Beispielsweise können diejenigen Datenbestandteile herausgefiltert werden, welche eine bestimmte Farbe aufweisen (zum Beispiel die Farbe des Hintergrunds). Das Farbfiltern kann beispielsweise farbkanalweise erfolgen, z.B. einzeln für den rot-Kanal, den blau-Kanal und den grün-Kanal. Es kann selbst verständlich auch ein anderer Farbraum als RGB verwendet werden.

Das Vergleichsfiltern und/oder das Farbfiltern können allerdings anfällig sein gegenüber der aktuellen Lichtsituation und/oder Reflexionen und daher beispielsweise unterstützend zu dem Tiefenfiltern verwendet werden.

Vorzugsweise kann das Tiefenfiltern (optional zusammen mit dem Farbfiltern) erfolgen. Es kann auch eine andere Kombination mehrerer Typen des Herausfilterns 701 erfolgen, z.B. des Tiefenfilterns zusammen mit dem Farbfiltern und/oder dem Vergleichsfiltern. Im Allgemeinen ermöglicht eine Kombination verschiedener Typen des Herausfilterns 701, mehr Information und/oder eine geringere Empfindlichkeit gegenüber Störungen zu erhalten.

Als Ergebnis des Herausfilterns 701 können diejenigen Datenbestandteile übrig bleiben, welche ein bewegliches Objekt in dem Erfassungsbereich 102e repräsentieren, dass sich von dem unbeweglichen (invarianten) Hintergrund des Erfassungsbereichs 102e unterscheidet. Dies ermöglicht es, die weiterzuverarbeitende Datenmenge zu optimieren und Fehlerquellen zu reduzieren.

In 703 können die gefilterten Bilddaten 212b klassifiziert werden (auch als Klassifizieren, genauer als Klassieren bezeichnet), d.h. einer Klasse 706 aus mehreren Klassen (auch als Bildklasse bezeichnet) zugeordnet werden. Das Klassifizieren erfolgt auf Grundlage der gefilterten Bilddaten 212b, z.B. mittels einer Objekterkennung oder Ähnlichem, wie vorstehend beschrieben ist, welche auf die gefilterten Bilddaten 212b angewendet wird. Je nachdem welcher Typ Objekt anhand der gefilterten Bilddaten 212b erkannt wird, kann die entsprechende Klasse zugeordnet werden.

Eine hierin beschriebene Objekterkennung kann beispielsweise mittels eines antrainierten Algorithmus erfolgen. Der Algorithmus kann beispielsweise Teil eines künstlichen Neuronalen Netzes (kNN) sein, wie hierin genauer beschrieben wird. Die Objekterkennung kann alternativ oder zusätzlich zu dem kNN auch mittels einer Kantenerkennung, einer Transformation, einer Größenerkennung und/oder einer Farberkennung erfolgen.

Die mehreren Bildklassen können beispielsweise eine erste Klasse (auch als Klasse "leer" bezeichnet) aufweisen, welche angibt, dass kein bewegliches Objekt anhand der gefilterten Bilddaten 212b erkannt wurde (d.h. der Erfassungsbereich 102e leer war). Die mehreren Bildklassen können eine oder mehr als eine Nicht-leer-Klasse (auch als Klasse "nicht-leer" bezeichnet) aufweisen, welche angibt, dass ein oder mehr als ein bewegliches Objekt erkannt wurde. Beispielsweise für die nicht-leere Klasse weisen auf: eine zweite Klasse (auch als Klasse "Hand" bezeichnet), welche repräsentiert, dass nur eine Hand und/oder kein Produkt erkannt wurde; eine dritte Klasse (auch als Klasse "Gegenstand" bezeichnet), welche repräsentiert, dass nur das Produkt und/oder keine Hand erkannt wurde; eine vierte Klasse (auch als Klasse "Hand mit Gegenstand" bezeichnet), welche repräsentiert, dass ein Produkt und eine Hand erkannt wurden.

Das Klassifizieren 703 kann gemäß verschiedenen Ausführungsformen mittels eines antrainierten Verarbeitungsalgorithmus (auch als Klassifizierungsalgorithmus oder vereinfacht Klassifikator bezeichnet) erfolgen. Beispiele für die Trainingsdaten zum Trainieren des Klassifizierungsalgorithmus können aufweisen: Bilddaten des leeren Erkennungsbereichs, Bilddaten des Erkennungsbereichs mit Hand, Bilddaten des Erkennungsbereichs mit Produkt, Bilddaten des Erkennungsbereichs mit Hand und Produkt. Beispiele für Zielgröße zum Trainieren des Klassifizierungsalgorithmus können die mehreren Bildklassen aufweisen.

Alternativ oder zusätzlich mögliche Beispiele für Trainingsdaten (auch als Eingangsvektoren bezeichnet) können aufweisen, dass die Tiefeninformation, auch für den Klassifikator bzw. die Klassifikation verwendet wird, so dass diese anschaulich nicht zwangsläufig nur zum Freistellen verwendet werden muss.

Alternativ oder zusätzlich mögliche Beispiele für Zielgrößen können aufweisen, dass die Klassen "Gegenstand" und "Hand mit Gegenstand" weiter unterteilt werden, um das Erscheinungsbild der Artikel mit einen oder mehr als einem Referenzerscheinungsbild zu vergleichen. Vereinfacht gesagt kann sicherzustellt werden, dass der Gegenstand, der aus der Eingangszone entnommen wurde, auch in der Ausgangszone wieder ankommt und nicht getauscht wird.

Beispiele für den Verarbeitungsalgorithmus können verschiedene Formen des maschinellen Lernens zur Bildklassifikation aufweisen, wie beispielsweise
- das sogenannte "Histogram of oriented gradients" (HOG) in Kombination mit einer Stützvektormaschine (SVM);
- ein vortrainiertes kNN mit "Standard-Architektur" (z.B. GoogLeNet), das ferner per "Transferlernen" und Feinanpassung auf das gegebene Problem angepasst wird.

Letzteres bringt allerdings für das gegebene Problem hohe Hardware-Anforderungen mit sich.

Beispielsweise werden die Einzelbilder der Bilddaten in folgende Bildklassen unterteilt: Klasse "leer" (es sind keine Objekte oberhalb der Referenzoberfläche erkennbar), Klasse "Hand" (es ist eine Hand ohne Gegenstand erkennbar), Klasse "Hand mit Gegenstand" (es ist eine Hand erkennbar, die einen Gegenstand führt), Klasse "Gegenstand" (ein Objekt liegt auf der Referenzoberfläche der ersten oder zweiten Zone).

Der Klassifizierungsalgorithmus kann beispielsweise eingerichtet sein, die Objekterkennung durchzuführen.

Werden dem Klassifizierungsalgorithmus die gefilterten (und damit reduzierten) Bilddaten 212b zugeführt, kann ein weniger komplexer Algorithmus und/oder ein weniger leistungsfähiger Prozessor verwendet werden, der den Klassifizierungsalgorithmus ausführt. Anschaulich weisen die gefilterten Bilddaten 212b im Wesentlichen nur noch diejenigen Datenteile auf, die von dem Hintergrund disjunkte Objekte repräsentieren, oder sind leer. Damit wird die zu verarbeitende Datenmenge optimiert und die Klassen sind stärker voneinander separiert.

In 705 kann das Bewegungsmuster 214m auf Grundlage eines Ergebnisses 706 des Klassifizierens 703 ermittelt werden, z.B. zonenweise. Dazu kann dem Klassifizieren 703 beispielsweise eine Sequenz von Bilddaten zugeführt werden, so dass eine Sequenz an Klassen 706 erhalten wird.

Die verschiedenen Zonen können so auf zeitliche Abläufe von Bildern/Klassen untersucht werden. Beispiele für so ermittelte Bewegungsmuster 214m können aufweisen:
- eine Aneinanderreihung [Klasse "leer"], [Klasse "Gegenstand"], [Klasse "leer"]. Dieses Bewegungsmuster 214m kann beispielsweise repräsentieren, dass ein Produkt in eine Zone eingeführt und wieder entfernt wird, z.B. beim Kennungserfassen (z.B. Scannen) eines Produkts in der dritten Zone 311c;
- eine Aneinanderreihung [Klasse "Gegenstand"], [Klasse "Hand"], [Klasse "Hand mit Gegenstand"], [Klasse "leer"]. Dieses Bewegungsmuster 214m kann beispielsweise repräsentieren, dass ein Entfernen eines Gegenstandes aus einer Zone erfolgt.

Beispielsweise können die Komponenten des Bewegungsmusters 214m die so ermittelter Klassen angegeben, z.B. in der Form [m], [n], [k] oder [m], [n], [m], wobei m, n und k die jeweilige Klasse referenzieren. Auf diese Weise kann das Bewegungsmuster beispielsweise als Vektor angegeben werden, der einfacher verarbeitet werden kann. In analoger Weise können Komponenten des Bewegungsmusters 214m daraus ermittelte Ereignisse referenzieren, z.B. das Ereignis des Bewegens eines Produktes aus der ersten Zone 311a heraus und/oder in die zweite Zone 311b hinein.

In einer wenig komplexen Implementierung kann der Klassifizierungsalgorithmus beispielsweise nur eine Unterscheidung zwischen einem Produkt und einer Hand bereitstellen. Die Klasse "leer" kann beispielsweise automatisch ermittelt werden, wenn die gefilterten Bilddaten 212b zu mehr als 99% gefiltert (z.B. geschwärzt) sind.

Optional kann eine Kombination aus einer oder mehr als einer 3D-Kamera und/oder einer oder mehr als einer RGB-Kamera oberhalb des Kassentisches bereitgestellt sein. Ein Kalibrierungsalgorithmus kann den Verarbeitungsalgorithmus anhand der sichtbaren 3D-Geometrie der mehreren Zonen 311a, 311b, 311c (wenn diese leer sind) anlernen (auch als Trainieren bezeichnet) und nähert diese 3D-Geometrie durch Ebenen unterschiedlicher relativer Entfernung an. Anhand der so ermittelten Topologie der zu überwachenden Zonen 311a, 311b, 311c kann ein Objekt, das sich oberhalb der Referenzebene 902 befindet, effektiv vom Hintergrund freigestellt werden. Dieser Mechanismus ist effektiver als eine rein RGB-Bild-basierte Segmentierung und ist nahezu unabhängig von Umwelteinflüssen wie Licht-, Schattenwurf und Reflektionen. Die resultierenden Bilddaten 212b können somit ebenfalls nahezu unabhängig von genannten Einflüssen bzw. des Standorts des SB-Registrierterminals sein. Dies ermöglicht eine robuste Klassifikation der Bilddaten ohne aufwändiges Anlernen der Algorithmen für jeden individuellen Standort.

Die Kalibrierung auf die Referenzebene und damit spätere Freistellung von Objekten kann unabhängig von der Klassifizierung der vorverarbeiteten Bilddaten erfolgen. Beispielsweise kann ein Klassifikator, der in einer bestimmten Geometrie nach der Freistellung angelernt wurde, auch ohne ein erneutes Anlernen in einer anderen (z.B. ähnlichen) Geometrie angewandt werden. Solange die Geometrie vergleichbar bleibt, d.h. in etwa gleiche Abstände zwischen den relevanten Objekten und der Kamera, kann der Algorithmus an dem einen SB-Registrierterminal 700 (oder auch in einer nachgestellten Geometrie) angelernt und auf einem anderen SB-Registrierterminal 700 eingesetzt werden. Die Kalibrierung auf die gegebene Referenzebene stellt sicher, dass die Bilddaten nicht nur unabhängig von der Umgebung, sondern auch nahezu unabhängig von der konkreten Geometrie des SB-Registrierterminal 700 sind.

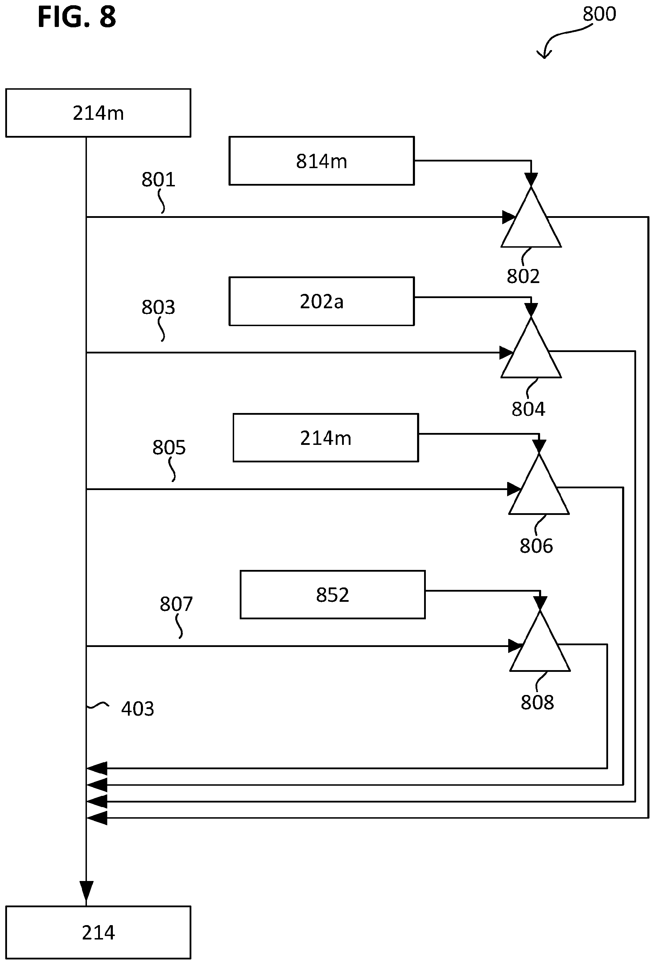

**Fig.8** veranschaulicht das Ermitteln 403 der Unbedenklichkeitsangabe 214 gemäß verschiedenen Ausführungsformen in einem schematischen Ablaufdiagramm 800, z.B. gemäß dem Verfahren 400 und/oder mittels der Steuervorrichtung 106 eines der SB-Registrierterminals 100 bis 300 implementiert.

Im Folgenden wird auf verschiedene Abweichungsangaben Bezug genommen. Eine Abweichungsangabe kann einen Wert aus einem Werteintervall aufweisen, wobei das untere Ende des Werteintervalls eine geringe Abweichung und das obere Ende des Werteintervalls eine hohe Abweichung repräsentiert oder andersherum. Alternativ oder zusätzlich kann die Abweichungsangabe eine Klasse ausgewählt aus mehreren Klassen (auch als Abweichungsklassen bezeichnet) aufweisen. Die mehreren Abweichungsklassen können beispielsweise eine erste Klasse "Übereinstimmung", eine zweite Klasse "Unterschied" und optional zusätzliche Klassen, wie beispielsweise Abstufungen dazwischen, aufweisen. Es können selbstverständlich auch andere Typen von Abweichungsangaben verwendet werden.

Das Ermitteln 403 kann in 801 aufweisen, das ermittelte Bewegungsmuster 214m mit einem oder mehr als einem Referenz-Bewegungsmuster 214m (auch als Referenzmuster bezeichnet) zu vergleichen. Das oder jedes Referenzmuster kann beispielsweise auf Grundlage eines vorgegebenen Registriervorgangs ermittelt werden. Das Ergebnis des Vergleichens in 801 kann eine Angabe 802 (auch als erste Abweichungsangabe bezeichnet) über die Abweichung (auch als Muster-Abweichung bezeichnet) zwischen dem Bewegungsmuster und dem Referenzmuster aufweisen.

Das Ermitteln 403 kann in 803 aufweisen, das ermittelte Bewegungsmuster 214m auf Konsistenz mit dem Kennungserfassen bzw. mit den erfassten Produktkennungen 202a zu vergleichen. Werden beispielsweise zwei Produkte bewegt aber nur die Kennung eines Produktes erfasst, ist möglicherweise ein Produkt unterschlagen worden. Ist eine zeitliche Differenz der Ereignisse des Bewegens gemäß dem Bewegungsmuster 214m und dem Kennungserfassen sehr groß, kann möglicherweise der Versuch vorliegen, das SB-Registrierterminal zu täuschen. Das Ergebnis des Vergleichens in 803 kann eine Angabe 804 (auch als zweite Abweichungsangabe bezeichnet) über die Inkonsistenz zwischen dem Bewegungsmuster und dem Kennungserfassen bzw. mit den erfassten Produktkennungen 202a aufweisen.

Das Ermitteln 403 kann in 805 aufweisen, zwei ermittelte Bewegungsmuster 214m (z.B. verschiedener Zonen) auf Konsistenz miteinander zu vergleichen. Werden beispielsweise zwei Produkte aus der ersten Zone 311a herausbewegt aber nur ein Produkt in die zweite Zone 311b hineinbewegt, ist möglicherweise ein Produkt unterschlagen worden. Das Ergebnis des Vergleichens in 805 kann eine Angabe 806 (auch als dritte Abweichungsangabe bezeichnet) über die Inkonsistenz zwischen den zwei Bewegungsmustern 214m aufweisen.

Das Ermitteln 403 kann in 807 aufweisen, das Bewegungsmuster 214m auf Konsistenz mit anderen Sensordaten des SB-Registrierterminals zu vergleichen, z.B. mit Sensordaten einer Ablagevorrichtung 302a, 302b, z.B. deren Waage. Werden beispielsweise zwei Produkte in die zweite Zone 311b hineinbewegt aber nur das Gewicht eines der Produkte mittels der zweiten Ablagevorrichtung 302b (z.B. deren Waage) erfasst, ist möglicherweise ein Produkt unterschlagen worden. Das Ergebnis des Vergleichens in 807 kann eine Angabe 808 (auch als vierte Abweichungsangabe bezeichnet) über die Inkonsistenz zwischen dem Bewegungsmuster 214m und den Sensordaten aufweisen.

Das Ermitteln 403 der Unbedenklichkeitsangabe 214 kann auf Grundlage einer oder mehr als einer der vorstehenden Abweichungsangaben erfolgen. Beispielsweise können diese einzeln oder mehrere (z.B. zwei, drei oder vier) Abweichungsangaben zusammen (z.B. in einander überlagerter Form) dem Ermitteln 403 der Unbedenklichkeitsangabe 214 zugeführt werden. Je mehre Abweichungsangaben verwendet werden, umso verlässlicher ist die Unbedenklichkeitsangabe 214. Vorzugsweise kann das Ermitteln 403 der Unbedenklichkeitsangabe 214 auf Grundlage der erste Abweichungsangabe 802 optional zusammen mit einer oder mehr als einer der zweiten bis vierten Abweichungsangabe 804, 806, 808 erfolgen.

In einem Beispiel kann der Scanvorgang (Bewegung aus der ersten Zone 311a über die dritte Zone 311c in die zweite Zone 311b) des oder jedes Produkts überwacht und bewertet werden auf Grundlage des Bewegungsmusters 214m zusammen mit den Signalen des Scanners 104 und optional der Sicherheitswaage 302b. Die Bewertung des gesamten Registriervorgangs kann dann zu einem Verdächtigkeitslevel und optional zu einer Intervention durch das Personal führen. Darüber hinaus ermöglicht die Echtzeitüberwachung des Registriervorgangs gezielte Hilfestellungen in Form von Lichtsignalen oder Bildschirmanweisungen, die den Registriervorgang unterschützen und beschleunigen. Beispielsweise können die gesammelten Daten des Registriervorgangs an vielen verschiedenen Kassen für eine spätere Analyse und darüber hinaus kontinuierliche Optimierung der oben beschriebenen Echtzeitauswertung genutzt werden.

Das Ermitteln 403 der Unbedenklichkeitsangabe 214 und/oder das Vergleichen 801, 803, 805, 807 können gemäß verschiedenen Ausführungsformen mittels eines antrainierten Algorithmus (auch als Konsistenzprüfungsalgorithmus bezeichnet) erfolgen. Beispiele für Trainingsdaten zum Trainieren des Konsistenzprüfungsalgorithmus können aufweisen: entsprechende Daten von konsistenten Registriervorgängen und/oder von inkonsistenten Registriervorgängen. Beispiele für Zielgröße zum Trainieren des Konsistenzprüfungsalgorithmus können die Abweichungsangabe und/oder die Unbedenklichkeitsangabe aufweisen.

In einem weniger komplexen Beispiel kann (z.B. alternativ zu dem Konsistenzprüfungsalgorithmus) ein Semaphor verwendet werden, um das Vergleichen 801, 803, 805, 807 zu implementieren. Beispielsweise kann zumindest zwei Teilvorgängen eines Scanvorgangs jeweils ein Semaphor zugewiesen werden, der inkrementiert wird, wenn der Teilvorgang erfasst wurde. Beispiele für die Teilvorgänge des Scanvorgangs können aufweisen: eine Bewegung aus der ersten Zone 311a heraus, eine Bewegung durch die dritte Zone 311c hindurch, eine Bewegung in die zweite Zone 311b hinein, ein Registrieren eines Gewichtsunterschiedes in der ersten Zone 311a oder der zweite Zone 311b, ein Kennungserfassen. Die Abweichungsangabe kann dann Abweichungen zwischen den jeweiligen Semaphoren repräsentieren. Anschaulich kann mitgezählt werden, wie viele Produkte entnommen, gescannt und wieder abgelegt werden, und überprüft werden, ob die Anzahl der jeweils gezählten Produkte übereinstimmt.

In einem anderen weniger komplexen Beispiel kann (z.B. alternativ zu dem Konsistenzprüfungsalgorithmus) ein quantitatives Ermitteln 403 der Unbedenklichkeitsangabe 214 erfolgen. Beispielsweise kann die Summe (oder auch der Mittelwert) der einfließenden Abweichungsangaben als Unbedenklichkeitsangabe 214 verwendet werden.

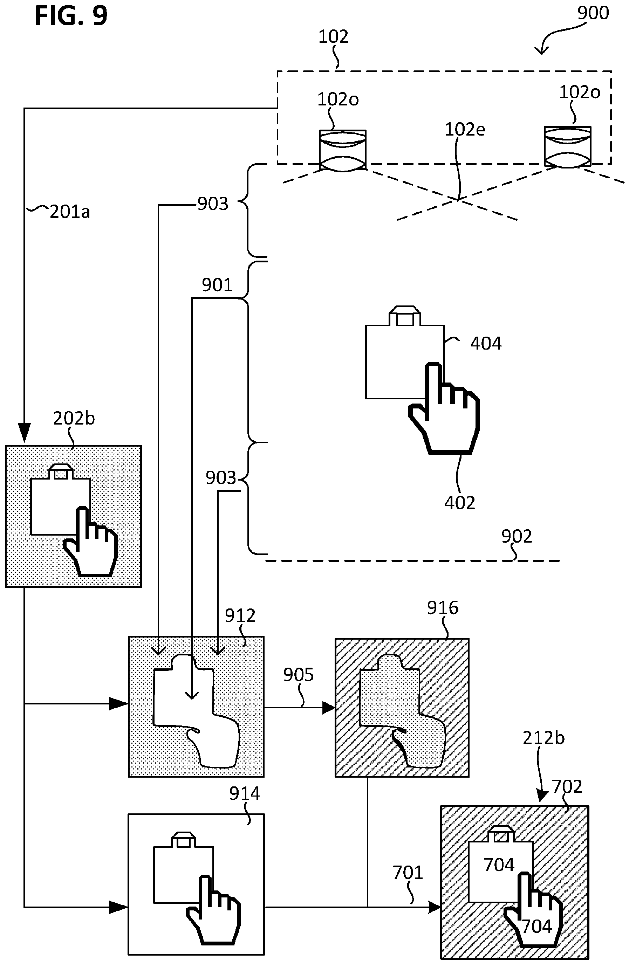

**Fig.9** veranschaulicht ein SB-Registrierterminal 900 in einem Verfahren gemäß verschiedenen Ausführungsformen in einer schematischen Seitenansicht. Das SB-Registrierterminal 900 kann eingerichtet sein wie eines der SB-Registrierterminals 100 bis 300. Das Verfahren kann beispielsweise gemäß dem Verfahren 400 eingerichtet sein und/oder mittels der Steuervorrichtung 106 des SB-Registrierterminals 900 implementiert sein oder werden. Die mittels der Bilderfassungsvorrichtung 102 erfassten Bilddaten 202b können Tiefeninformationen 912 und (monochrome oder polychrome) Farbinformationen 914 aufweisen. Die Tiefeninformationen 912 können beispielsweise mittels einer Stereokamera der Bilderfassungsvorrichtung 102 bereitgestellt sein oder werden. Das Freistellen 701 kann beispielsweise unter Verwendung der Tiefeninformationen 912 erfolgen (auch als Tiefenfiltern bezeichnet).

Eine Stereokamera kann mehrere (z.B. zwei) nebeneinander angeordnet Objektive 102o aufweisen, welche auf den Erfassungsbereich 102e gerichtet sind. Die mehreren Objektive 102o können eingerichtet sein, den Erfassungsbereich 102e auf einen oder mehr als einen Bilderfassungssensor der Bilderfassungsvorrichtung 102 abzubilden. Damit werden anschaulich Bilddaten erfasst, die mehrere Perspektiven des Erfassungsbereichs 102e zur selben Zeit repräsentieren (auch als stereoskopische Bilddaten bezeichnet), d.h. die den Erfassungsbereich 102e aus verschiedenen Richtungen und/oder von verschiedenen Orten aus betrachtet repräsentieren. Die Belichtungssteuerung und/oder die Schärfeneinstellung der Objektive können dazu beispielsweise miteinander gekoppelt sein.

Die Tiefeninformationen 912 können auf Grundlage der stereoskopischen Bilddaten des Erfassungsbereichs 102e ermittelt werden. Beispielsweise können die verschiedenen Perspektiven der stereoskopischen Bilddaten einander überlagert und daraus die Tiefeninformationen abgeleitet werden. Das für die stereoskopische Bilderfassungsvorrichtung 102 Beschriebene kann in Analogie auch für eine anders eingerichtete Bilderfassungsvorrichtung 102 gelten, welche einen anderen Mechanismus implementiert, um die Tiefeninformationen bereitzustellen.

Im Allgemeinen können die Tiefeninformationen 912 eine Information aufweisen, welche mehrere Bilddatenbestandteile der Bilddaten in eine räumliche Beziehung zueinander und/oder zu einem Referenzobjekt 902, 102 setzt. Den entsprechenden Bilddatenbestandteilen kann eine Tiefeninformation zugeordnet sein, welche die räumliche Beziehung repräsentiert. Als Bilddatensegment können beispielsweise einzelne Pixel (d.h. die Tiefeninformation 912 kann pixelweise aufgelöst sein) oder mehrere Pixeln (die sogenannte Pixelgruppe) verwendet werden. Das Referenzobjekt 902, 102 kann beispielsweise die Bilderfassungsvorrichtung 102 und/oder die Referenzebene 902 aufweisen oder daraus gebildet sein. Beispielsweise können die Tiefeninformationen 912 pixelweise einen Abstand von dem Referenzobjekt 902, 102 angeben.

Die Tiefeninformationen 912 können den Farbinformationen 914 überlagert oder anderweitig an diese abgebildet werden. Die Tiefeninformationen 912 können beispielsweise auf die Filtermaske 916 abgebildet werden 905. Die Filtermaske 916 kann beispielsweise entsprechend der Bilddaten 202b als Vektorgrafik oder Rastergrafik bereitgestellt sein.

Dies ermöglicht es, beispielsweise diejenigen Bilddatensegmente herauszufiltern 701, deren Tiefeninformationen ein vordefiniertes (z.B. abgespeichertes) Kriterium erfüllt. Das Kriterium kann anschaulich erfüllt sein, wenn die Tiefeninformationen einen geringen Abstand von dem Referenzobjekt 902, 102 repräsentiert, z.B. weniger als 10 cm. Als Ergebnis des Herausfilterns 701 können diejenigen Bilddatensegmente 704 übrig bleiben, welche ein Objekt 404, 402 innerhalb einer Schicht 901 (auch als Interessenschicht 901 bezeichnet) des Erfassungsbereichs 102e repräsentieren. Die Interessenschicht 901 kann räumlich von dem Referenzobjekt 902, 102 separiert sein, z.B. von einer Nicht-Interessenschicht 903, die an das Referenzobjekt 902, 102 angrenzt.

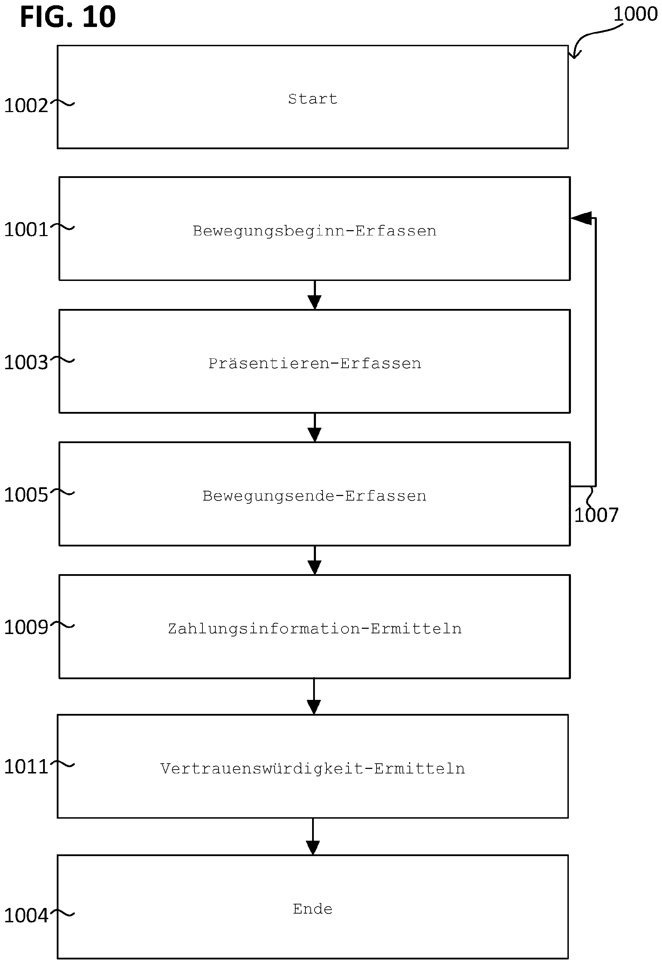

**Fig.10** veranschaulicht ein Verfahren 1000 gemäß verschiedenen Ausführungsformen in einem schematischen Ablaufdiagram, z.B. gemäß dem Verfahren 400 und/oder mittels der Steuervorrichtung 106 eines der SB-Registrierterminals 100 bis 300 oder 900 implementiert. Das Verfahren 1000 kann in 1002 aufweisen, eine Registriersitzung 202 zu starten, z.B. in Antwort auf das Sitzungsstartereignis.

Das Verfahren 1000 kann in 1001 aufweisen, zu erfassen, dass eine Bewegung eines Produkts 404 beginnt, z.B. durch einen Benutzer des SB-Registrierterminals (auch als Bewegungsbeginn-Erfassen bezeichnet). Der Beginn des Bewegens des Produktes kann mittels eines Bewegungsmusters 214m ermittelt werden. Beispielsweise kann das Bewegungsmuster 214m repräsentieren, dass (z.B. in der Eingabezone 311a) nacheinander ein ortsfest angeordnetes Produkt ohne Hand erfasst wird, dann das Produkt mit Hand erfasst wird, und dann weder ein Produkt noch eine Hand erfasst werden. Das Bewegungsmuster 214m kann alternativ oder zusätzlich repräsentieren, dass das Produkt aus der Eingabezone 311a heraus bewegt wird. Das Produkt kann bei dem Beginn des Bewegens beispielsweise in der Eingabezone 311a angeordnet sein.

In Antwort auf das Bewegungsbeginn-Erfassen 1001, d.h. darauf, dass erfasst wurde, dass die Bewegung des Produkts beginnt, kann beispielsweise ein erster Semaphor inkrementiert, z.B. ein Produktaufnahmezähler um eins erhöht, werden. In Antwort auf das Bewegungsbeginn-Erfassen 1001, kann alternativ oder zusätzlich ein Timer gestartet werden. Beispielsweise kann ein Alarm nach dem Ablauf des Timers (auch als Zeitauslöser oder Zeitschalter bezeichnet) ausgelöst werden, wenn kein Bewegungsstopp-Erfassen 1005 erfolgt. In Antwort auf das Bewegungsbeginn-Erfassen 1001, kann optional mittels der Informationsausgabevorrichtung 124 eine Information (auch als Präsentationsinformation bezeichnet) ausgegeben werden, die angibt, das Produkt der Produkterfassungsvorrichtung 104 präsentiert werden soll. Die Präsentationsinformation kann beispielsweise eine entsprechende Aufforderung (z.B. Text) und/oder Hilfestellung (z.B. sichtbare Pfeile) aufweisen.

Das Verfahren 1000 kann in 1003 aufweisen, zu erfassen, dass das Produkt 404 der Produkterfassungsvorrichtung 104 präsentiert wird (auch als Präsentieren-Erfassen 1003 bezeichnet). Das Präsentieren-Erfassen 1003 kann mittels eines Bewegungsmusters 214m ermittelt werden und/oder wenn das Kennungserfassen erfolgt. Beispielsweise kann das Bewegungsmuster 214m repräsentieren, dass (z.B. in der Scanzone 311c) weder ein Produkt noch eine Hand erfasst werden, danach das Produkt mit Hand erfasst werden, und danach weder ein Produkt noch eine Hand erfasst werden. Das Bewegungsmusters 214m kann alternativ oder zusätzlich repräsentieren, dass das Produkt in der Scanzone 311c und/oder durch diese hindurch bewegt wird. Das Produkt kann bei dem Präsentieren-Erfassen 1003 beispielsweise in der Scanzone 311c angeordnet sein und/oder darin bewegt werden. Das Präsentieren-Erfassen 1003 kann beispielsweise aufweisen, die Produktkennung 202a des Produkts 404 zu erfassen (dann auch als Produktkennung-Erfassen 1003 bezeichnet), welches der Produkterfassungsvorrichtung 104 präsentiert wird.

In Antwort auf das Präsentieren-Erfassen 1003, d.h. darauf, dass erfasst wurde, dass das Produkt 404 der Produkterfassungsvorrichtung 104 präsentiert wird, kann beispielsweise ein zweiter Semaphor inkrementiert, z.B. ein Scanzähler um eins erhöht, werden. In Antwort auf das Präsentieren-Erfassen 1003, kann alternativ oder zusätzlich der Status des Timers (z.B. die bis dahin abgelaufene Zeit) zum Zeitpunkt des Präsentieren-Erfassen 1003 erfasst werden. Beispielsweise kann der zeitliche Abstand zwischen dem Präsentieren-Erfassen 1003 und dem Bewegungsbeginn-Erfassen 1001 erfasst werden. Beispielsweise kann die Angabe über die Vertrauenswürdigkeit zusätzlich auf dem Status des Timers beim Präsentieren-Erfassen 1003 basieren.

In Antwort auf das Präsentieren-Erfassen 1003, kann beispielsweise mittels der Informationsausgabevorrichtung 124 eine Information (auch als Ablageinformation bezeichnet) ausgegeben werden, die angibt, dass das Produkt in die Ablagezone 311b bewegt werden soll. Die Ablageinformation kann beispielsweise eine entsprechende Aufforderung (z.B. Text) und/oder Hilfestellung (z.B. sichtbare Pfeile) aufweisen.

Das Verfahren 1000 kann in 1005 aufweisen, zu erfassen, dass die Bewegung eines Produkts 404 endet, z.B. durch einen Benutzer des SB-Registrierterminals (auch als Bewegungsende-Erfassen bezeichnet). Das Ende des Bewegens des Produktes kann mittels eines Bewegungsmusters 214m ermittelt werden. Beispielsweise kann das Bewegungsmuster 214m repräsentieren, dass (z.B. in der Ablagezone 311b) nacheinander weder ein Produkt noch eine Hand erfasst werden, dann das Produkt mit Hand erfasst werden, und dann ein ortsfest angeordnetes Produkt erfasst wird. Das Bewegungsmuster 214m kann alternativ oder zusätzlich repräsentieren, dass das Produkt in die Ablagezone 311b hinein bewegt wird. Das Produkt kann bei dem Ende des Bewegens beispielsweise in der Ablagezone 311b angeordnet sein.

In Antwort auf das Bewegungsende-Erfassen 1005, d.h. darauf, dass erfasst wurde, dass die Bewegung des Produkts endet, kann beispielsweise ein dritter Semaphor inkrementiert, z.B. ein Produktablagezähler um eins erhöht, werden. In Antwort auf das Bewegungsende-Erfassen 1005, kann der Status des Timers (z.B. die bis dahin abgelaufene Zeit) zum Zeitpunkt des Bewegungsende-Erfassen 1005 erfasst werden. Beispielsweise kann der zeitliche Abstand zwischen dem Bewegungsende-Erfassen 1005 und dem Bewegungsbeginn-Erfassen 1001 erfasst werden. Beispielsweise kann die Angabe über die Vertrauenswürdigkeit zusätzlich auf dem Status des Timers beim Bewegungsende-Erfassen 1005 basieren. In Antwort auf das Bewegungsende-Erfassen 1005, kann optional der Timer beendet werden.

In Antwort auf das Bewegungsende-Erfassen 1005 kann beispielsweise mittels der Informationsausgabevorrichtung 124 eine Information (auch als Weiterführungsinformation bezeichnet) ausgegeben werden, die angibt, dass das nächste Produkt der Produkterfassungsvorrichtung präsentiert werden kann. Die Weiterführungsinformation kann beispielsweise eine entsprechende Aufforderung (z.B. Text) und/oder Hilfestellung (z.B. sichtbare Pfeile) aufweisen.

Das Verfahren 1000 kann in 1007 aufweisen, ein zusätzliches Bewegungsbeginn-Erfassen 1001 durchzuführen. Beispielsweise kann eine Sequenz 1007, die das Bewegungsbeginn-Erfassen 1001, das Präsentieren-Erfassen 1003 und das Bewegungsende-Erfassen 1005 aufweist, fortlaufend wiederholt werden bis das Sitzungsendereignis erfasst wird.

Das Verfahren 1000 kann in 1009 aufweisen, die Zahlungsinformation basierend auf der oder jeder Produktkennung zu ermitteln, die während der Registriersitzung 202 ermittelt wurde (auch als Zahlungsinformation-Ermitteln 1009 bezeichnet). Das Zahlungsinformation-Ermitteln 1009 kann beispielsweise aufweisen, einen Preis, die der oder jeder erfassten Produktkennung zugeordnet sind, zu ermitteln bzw. mehrere solcher Preise zu summieren. Das Zahlungsinformation-Ermitteln 1009 kann optional auch Teil der Sequenz 1007 sein.

Das Verfahren 1000 kann in 403 aufweisen, die Angabe über die Vertrauenswürdigkeit der Zahlungsinformationen zu ermitteln (auch als Vertrauenswürdigkeit-Ermitteln 403 bezeichnet). Die Angabe über die Vertrauenswürdigkeit der Zahlungsinformationen kann auf Grundlage eines oder mehr als eines Bewegungsmusters 214m, das zum Bewegungsbeginn-Erfassen 1001, zum Präsentieren-Erfassen 1003 und/oder zum Bewegungsende-Erfassen 1005 verwendet wird, ermittelt werden. Die Angabe über die Vertrauenswürdigkeit der Zahlungsinformationen kann optional auf Grundlage eines oder mehr als eines Status des Timers beim Präsentieren-Erfassen 1003 und/oder beim Bewegungsende-Erfassen 1005 ermittelt werden. Die Angabe über die Vertrauenswürdigkeit der Zahlungsinformationen kann optional auf Grundlage eines Status eines oder mehr als eines Semaphors ermittelt werden (z.B. deren Vergleich), z.B. auf Grundlage des ersten Semaphors, des zweiten Semaphors und/oder des dritten Semaphors. Beispielsweise kann eine Differenz zwischen mehreren Semaphoren oder eine andere statistische Größe der mehreren Semaphoren berücksichtigt werden (wenn vorhanden). Alternativ oder zusätzlich zu der Differenz kann allgemeiner gesprochen auch ein anderes Ergebnis eines Vergleichs zwischen mehreren Semaphoren verwendet werden.

Die Angabe über die Vertrauenswürdigkeit der Zahlungsinformationen kann beispielsweise fortlaufend aktualisiert werden, z.B. iterativ und/oder bei jeder Sequenz 1007. Alternativ oder zusätzlich kann auch eine Vertrauenswürdigkeit der Zahlungsinformationen für die gesamte Registriersitzung 202 ermittelt werden.

Das Verfahren 1000 kann in 1004 aufweisen, die Registriersitzung 202 zu beenden, z.B. in Antwort auf das Sitzungsendereignis. Beispielsweise kann der Nutzer eingeben, auf welche Weise (auch als Zahlungsweise bezeichnet) er zahlen möchte, und die Kosten gemäß den Zahlungsinformationen begleichen mittels der ausgewählten Zahlungsweise (z.B. per Lastschrift, per Kreditkarte, mittels Bargeld, usw.).

Optional können die Daten (z.B. Bewegungsmuster, Kenndaten, Zeiten und/oder Bilddaten, usw.), die während der Registriersitzung 202 erfasst wurden, abgespeichert werden. Diese Daten können beispielsweise als Trainingsdaten für den Klassifizierungsalgorithmus, den Konsistenzprüfungsalgorithmus und/oder den Objekterkennungsalgorithmus verwendet werden.

Erfüllt die Unbedenklichkeitsangabe 214 ein vordefiniertes (z.B. abgespeichertes) Kriterium, kann ein Alarm ausgelöst werden. Das Kriterium kann repräsentieren, dass die Vertrauenswürdigkeit inakzeptabel (z.B. zu gering) ist. Dies ermöglicht es, einen Mitarbeiter zu informieren, darüber dass die Vertrauenswürdigkeit der Zahlungsinformationen infrage steht (d.h. zweifelhaft ist).

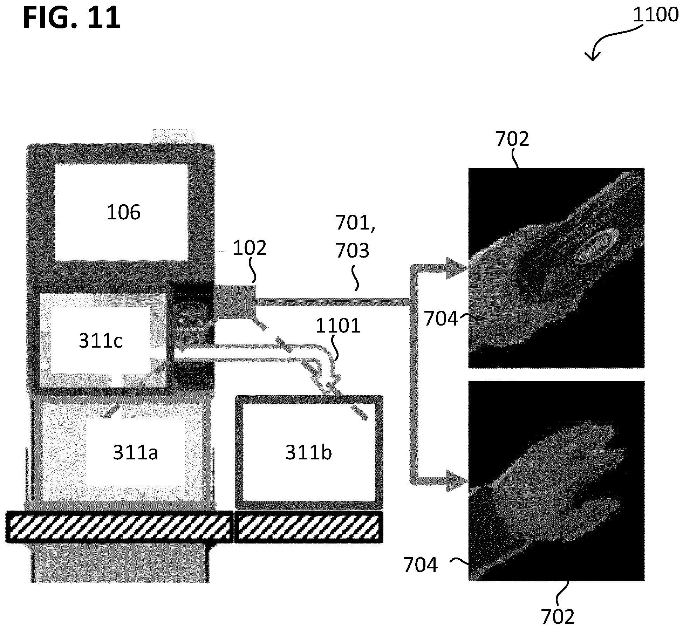

**Fig.11** veranschaulicht ein SB-Registrierterminal 1100 in einem Verfahren gemäß verschiedenen Ausführungsformen in einer schematischen Seitenansicht, beispielsweise gemäß dem Verfahren 400 eingerichtet und/oder mittels der Steuervorrichtung 106 implementiert. Das SB-Registrierterminal 1100 kann eingerichtet sein, 3D-Informationen (auch als Tiefeninformation bezeichnet) und Farbinformationen gleichzeitig mittels der Bilderfassungsvorrichtung 102, z.B. dessen einer oder mehr als einer Kamera, zu erfassen. Die Steuervorrichtung 106 kann eingerichtet sein, die Bilddaten (z.B. deren Farbinformationen) in verschiedene Datensegmente zu unterteilen und/oder diese zu klassifizieren.

Die 3D-Informationen können beispielsweise verwendet werden, um die Farbinformationen zu segmentieren und relevante Datensegmente herauszustellen, z.B. diejenigen, die eine oder mehr als eine Hand und/oder ein oder mehr als ein Produkt repräsentieren. Die segmentierten Bilddaten können dem Klassifikator der Steuervorrichtung 106 zugeführt werden. Der Klassifikator kann beispielsweise ein neuronales Netz aufweisen oder daraus gebildet sein, z.B. ein faltendes neuronales Netzwerk, wie später noch genauer beschrieben wird.

In Antwort auf das Erkennen einer oder mehr als einer Hand in dem Erkennungsbereich 102e, z.B. in den verschiedenen Zonen 311a, 311b, 311c des Erkennungsbereichs 102e, kann ein oder mehr als ein Ereignis ausgelöst werden. Das eine oder mehr als eine Ereignis kann beispielsweise das Initiieren des Timers und/oder das Inkrementieren eines Semaphors aufweisen. Das eine oder mehr als eine Ereignis kann optional aufweisen, das Bewegen 1101 (auch als Handling bezeichnet) des Produkts im zeitlichen Verlauf abzuschätzen. Beispielsweise kann ein Abschätzen des schon geschehenen Handlings aus schon geschehenen Ereignissen erfolgen. Das Ermitteln des Bewegungsmusters 214m lässt sich bei Verwendung einer geringen Anzahl (z.B. vier) an Klassen und das Freistellen (Herausfiltern des Hintergrundes, d.h. der Umgebung) einfacher gestalten. Beispielsweise werden dadurch Freiheitsgrade eliminiert und das Konvergenzverhalten der Unbedenklichkeitsangabe 214 verbessert. Dies ermöglicht es, ein sehr aufgabeoptimiertes, effizientes kNN als Algorithmus zu verwenden.

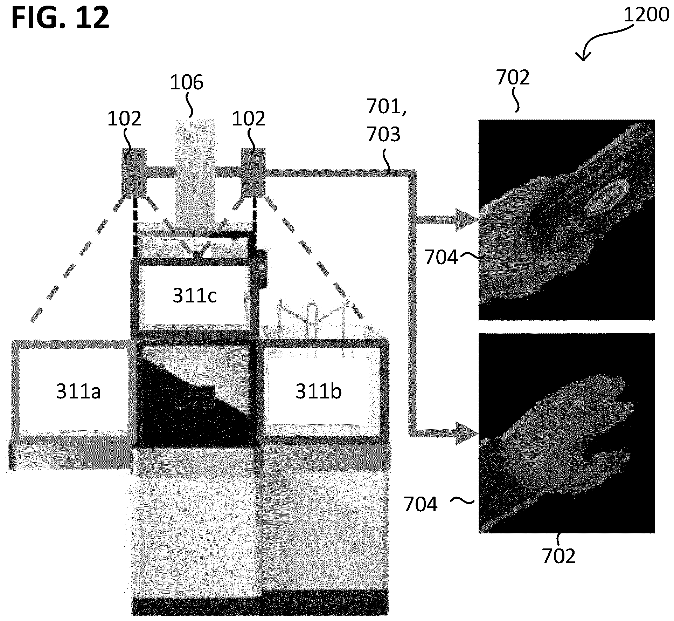

**Fig.12** veranschaulicht das SB-Registrierterminal 1200 in einem Verfahren gemäß verschiedenen Ausführungsformen in einer schematischen Seitenansicht, das ähnlich eingerichtet ist, wie das SB-Registrierterminal 1100, wobei die Bilderfassungsvorrichtung 102 mehrere Stereokameras aufweist. Mehrere Stereokameras ermöglichen mehr Zonen bzw. einen größeren Bereich zu überwachen und/oder die Scanzone 311c mehrfach (anschaulich doppelt) zu überwachen, um so eine größere Robustheit zu erreichen.

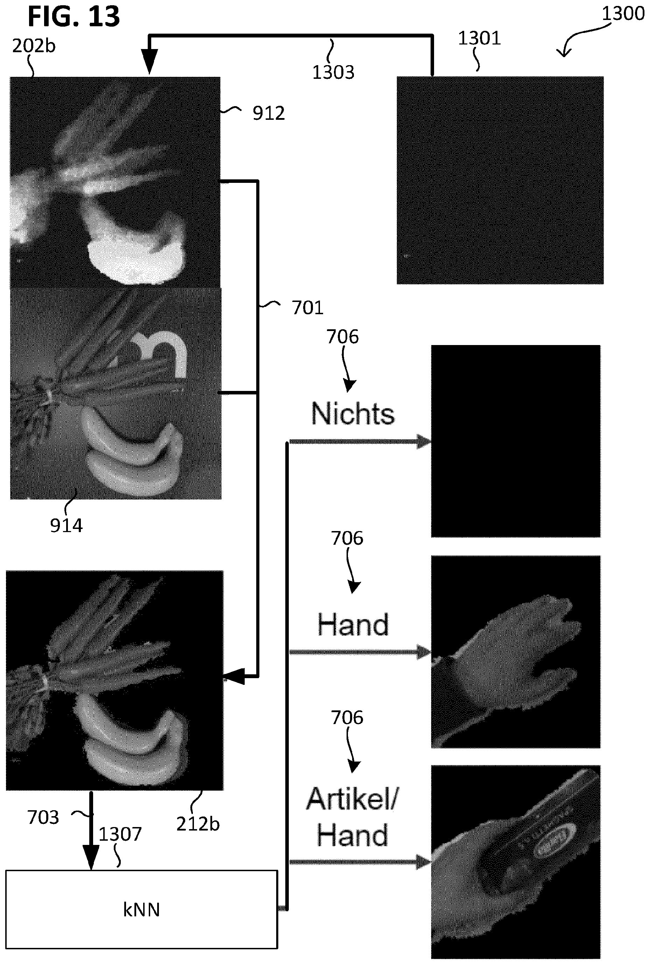

**Fig.13** veranschaulicht ein Verfahren 1300 gemäß verschiedenen Ausführungsformen in einem schematischen Ablaufdiagram, beispielsweise gemäß dem Verfahren 400 eingerichtet und/oder mittels der Steuervorrichtung 106 implementiert.

Das Verfahren 1300 kann in 1301 aufweisen, den oder jeden Verarbeitungsalgorithmus zu kalibrieren. Das Kalibrieren 1301 kann beispielsweise nur einmalig nötig sein, z.B. beim Systemstart und/oder nach Montage des SB-Registrierterminals, und später weggelassen werden. Alternativ oder zusätzlich kann das Kalibrieren 1301 wiederholt werden, z.B. in Ruhephasen des SB-Registrierterminals. Das Kalibrieren 1301 kann aufweisen, mittels der Bilderfassungsvorrichtung 102 erste Bilddaten des leeren Erfassungsbereichs 102e (z.B. dessen Referenzebene) zu erfassen. Die ersten Bilddaten können Tiefeninformationen 1303a und/oder Farbinformationen 1303b (z.B. beides gleichzeitig erfasst) aufweisen (auch als Referenz-Tiefeninformationen bzw. Referenz-Farbinformationen bezeichnet). Die Referenzebene 902 kann beispielsweise planar sein und daher keine oder nur wenig Topografie (auch als 3D-Stuktur bezeichnet) aufweisen. Die ersten Bilddaten des leeren Erfassungsbereichs 102e können abgespeichert und/oder als Referenzbilddaten für den Verarbeitungsalgorithmus (z.B. den Objekterkennungsalgorithmus und/oder den Klassifizierungsalgorithmus) verwendet werden.

Das Kalibrieren 1301 kann mittels des Kalibrierungsalgorithmus erfolgen, der beispielsweise einen oder mehr als einen Satz Referenz-Tiefeninformationen bzw. Referenz-Farbinformationen und/oder ein oder mehr als ein Referenzmuster ermittelt.

Das Verfahren 1300 kann in 1303 aufweisen, mittels der Bilderfassungsvorrichtung 102 zweite Bilddaten (z.B. aufweisend) des Erfassungsbereichs 102e (z.B. dessen Referenzebene) zu erfassen, in welchem eine Hand und/oder ein Produkt (auch als Artikel bezeichnet) angeordnet sind. Die zweiten Bilddaten 202b können Tiefeninformationen 912 und/oder Farbinformationen 914 (z.B. beides gleichzeitig erfasst) aufweisen. Die Tiefeninformationen 912 können beispielsweise die Topografie oberhalb der Referenzebene 902 mittels einer hell/dunkel-Abstufung repräsentieren.

Das Verfahren 1300 kann in 701 aufweisen, das Objektfiltern auf die zweiten Bilddaten anzuwenden. Als Ergebnis des Objektfilterns 701 können dritte Bilddaten 212b (auch als segmentierte Bilddaten 212b bezeichnet) bereitgestellt werden. Die dritten Bilddaten 212b können ein oder mehr als ein Objektdatensegment der zweiten Bilddaten 202b aufweisen, welches ein oder mehr als ein bewegliches Objekt (z.B. die Hand und/oder das Produkt) in dem Erfassungsbereich 102e (bzw. dessen Zone) repräsentiert.

Das Objektfiltern 701 kann beispielsweise aufweisen, die Farbinformationen pixelweise gemäß den Tiefeninformationen zu maskieren. Beispielsweise kann auf diese Weise jedes Pixel der Farbinformationen maskiert werden. Das Maskieren kann aufweisen, diejenigen Pixel der Farbinformationen, deren Tiefeninformationen im Wesentlichen der Referenzebene entsprechen (die beispielsweise anschaulich nicht oberhalb der Referenzebene liegen) zu schwärzen. Als Ergebnis des Maskierens können nur die Pixel des einen oder mehr als einen Objektdatensegments nicht schwarz sein und die restlichen Pixel schwarz sein.

Das Verfahren 1300 kann in 703 aufweisen, das Klassifizieren der dritten Bilddaten 212b (d.h. der segmentierten Bilddaten) durchzuführen. Das Klassifizieren 703 erfolgt mittels eines Klassifikator 1307, z.B. mittels eines kNN. Als Ergebnis des Klassifizierens 703 wird den dritten Bilddaten eine Klasse 706 aus mehreren (z.B. zwei oder mehr, z.B. genau drei) Klassen zugeordnet sein. Die mehreren Klassen weisen die Klasse "leer" (auch als "nichts" bezeichnet) auf und können beispielsweise die Klasse "Hand" und die Klasse "Gegenstand und Hand" aufweisen.

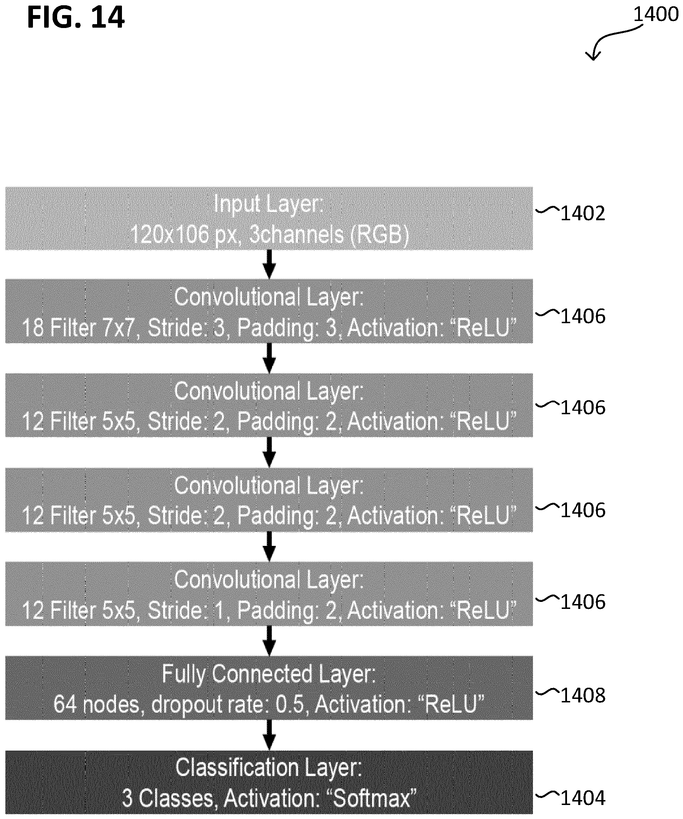

**Fig.14** veranschaulicht den Klassifikator 1307 gemäß verschiedenen Ausführungsformen in einem schematischen Aufbaudiagram 1400, beispielsweise gemäß dem Verfahren 400 eingerichtet und/oder mittels der Steuervorrichtung 106 implementiert. Der Klassifikator 1307 ist als faltendes neuronales Netzwerk eingerichtet sein. In nicht erfindungsgemäßen Ausführungsformen kann auch ein anders eingerichteter Klassifikator 1307 verwendet werden, welcher die entsprechenden Funktionen bereitstellt.

Der Klassifikator 1307 weist zumindest eine Eingabeschicht 1402 Layer") auf, und kann zumindest eine Ausgabeschicht 1404 ("Classification Layer", auch als Abschlussschicht bezeichnet) aufweisen und zwischen diesen eine oder mehr als eine Verarbeitungsschicht 1406, 1408. Die Eingabeschicht 1402 kann beispielsweise eine Auflösung der eingehenden Bilddaten (hier exemplarisch 120 x 106 Pixel) und/oder einen Farbraum für die Farbinformationen der eingehenden Bilddaten definieren (hier exemplarisch RGB). Alternativ oder zusätzlich zu RGB (Rot-Grün-Blau-Farbraum) kann auch jeder andere Farbraum verwendet werden, der sich für den Klassifikator 1307 eignet, z.B. ein anderer technisch-physikalischer Farbraum wie CMYK (Cyan-Magenta-Gelb-Schwarz-Farbraum) oder auch ein perzeptueller Farbraum (der beispielsweise Merkmale wir Helligkeit, Sättigung und Farbton beschreibt).

Wird ein faltendes neuronales Netzwerk als Klassifikator 1307 verwendet, kann die eine oder mehr als eine Verarbeitungsschicht zumindest eine Faltungsschicht 1406 ("Convolutional Layer") und zumindest eine Zwischenschicht 1408 ("Fully Connected Layer") aufweisen. Optional kann zwischen der zumindest einen Faltungsschicht 1406 und der zumindest einen Zwischenschicht 1408 (auch als vollverbundene Schicht bezeichnet) eine Bündelungsschicht ("Pooling Layer") geschaltet sein (nicht dargestellt).

Die eingehenden Bildinformationen werden mittels einer entsprechenden Matrix (z.B. die Pixel eines Graustufen- oder Farbbildes) repräsenentiert. Die Matrix (bei mehr als drei Dimensionen auch als Tensor bezeichnet) referenziert in einer ersten Dimension eine erste räumliche Koordinate (z.B. x-Koordinate), in einer zweiten Dimension eine zweite räumliche Koordinate (z.B. y-Koordinate, in einer oder mehr als einer dritten Dimension die Farbinformation (z.B. einen Punkt im Farbraum) und in einer vierten Dimension die Tiefeninformation (z.B. z-Koordinate). Die Koordinate der Tiefeninformation kann beispielsweise entlang einer Richtung referenziert werden, die entlang der Richtung des Erfassens der Bilddaten und/oder quer zu der Referenzebene 902 verläuft.

Entsprechend der Dimension der Bildinformationen können die Knoten jeder Faltungsschicht 1406 auch mehrdimensional angeordnet sein. Optional kann das Objektfiltern aufweisen, die Dimension der Tiefeninformation zu entfernen zum Bilden der gefilterten Bilddaten. Alternativ oder zusätzlich kann das Objektfiltern aufweisen, diejenigen Einträge der Farbinformationen des Tensors, an denen die Tiefeninformation einen Schwellenwert überschreitet, gegen Nullen zu ersetzen.

Die Aktivität jedes Knotens einer Faltungsschicht 1406 kann mittels einer diskreten Faltung berechnet werden. Die diskrete Faltung jedes Knotens kann von einer Aktivierungsfunktion in eine Ausgabe des Knotens überführt werden. Als Aktivierungsfunktion kann beispielsweise eine ReLU-Funktion verwendet werden. Im Kontext künstlicher neuronaler Netze oder Trainingsverfahren ist eine ReLU-Funktion (auch als Rectifier-Funktion, Gleichrichter-Funktion oder kurz auch als ReLU bezeichnet) eine Aktivierungsfunktion, die im Wesentlichen als Positivteil ihres Arguments definiert ist.

Mehrere Parameter steuern den Umfang der Ausgabe (auch als Ausgangsvolumen bezeichnet) einer Faltungsschicht 1406, beispielsweise die Parameter Filteranzahl ("depth"), Schrittweite ("stride") und Auffüllung ("Padding" oder "Null-Padding").

Die Filteranzahl entspricht der Anzahl der Filter (hier exemplarisch 18 Filter oder 12 Filter), die verwendet werden, wobei jeder der Filter trainiert wird, nach etwas anderem in den Eingangsdaten der Faltungsschicht 1406 zu suchen. Die Größe eines Filters kann in Pixel angegeben werden (hier exemplarisch 7 x 7 Pixel oder 5 x 5 Pixel). Wenn beispielsweise die Bilddaten im Rohdatenformat (auch als Rohbilddaten bezeichnet) als Eingangsdaten der ersten Faltungsschicht 1406 zugeführt werden, können verschiedene Knoten entlang der Tiefenabmessung in Gegenwart verschiedener orientierter Kanten oder Farbflecken aktiviert werden. Die Schrittweite gibt an, wie weit ein Filter verschoben wird. Wenn die Schrittweite gleich 1 ist, dann wird ein Filter um ein Pixel verschoben. Wenn die Schrittweite 2 bzw. 3 ist, dann wird der Filter 2 bzw. 3 Pixel auf einmal verschoben. Dadurch werden räumlich kleinere Leistungsvolumen erzeugt. Im Verlauf vom Eingang zum Ausgang des Klassifikators 1307 kann die Schrittweite der Faltungsschichten 1406 abnehmen (hier exemplarisch von 3 auf 1). Mittels des Null-Paddings können Eingangsdaten mit Nullen am Rand gefüllt werden. Dies erlaubt, die räumliche Größe der Ausgabedaten einer Faltungsschicht 1406 zu kontrollieren.

Die zumindest eine (d.h. eine oder mehr als eine) Abschlussschicht 1404 kann das Netzwerk entsprechend der Architektur des mehrlagigen Perzeptrons abschließen. Die Anzahl der Knoten (hier exemplarisch 64) einer Zwischenschicht 1408 korrespondiert beispielsweise zu der Anzahl an (Objekt-)Klassen, die die jeweilige Zwischenschicht 1408 unterscheiden soll. Diese, sehr redundante, sogenannte 1-aus-n-Kodierung ("One-Hot-encoding") hat den Vorteil, dass nicht notwendigerweise implizite Annahmen über Ähnlichkeiten von Klassen gemacht werden müssen.

Diese Abschlussschicht 1404 hat beispielsweise drei Knoten für drei Klassen ("Nichts", "Hand", "Gegenstand und Hand"). Die vorgelagerte Zwischenschicht 1408 ist eine sogenannte verstecke Schicht ("hidden layer"). Diese Zwischenschicht 1408 ermöglicht, verschiedene Entscheidungswege zwischen der letzten faltenden Schicht 1406 und der eigentlichen Klassifizierung 1404 abzubilden.

Anschaulich kann der Block 1406 aus faltenden Schichten die Funktion der Merkmalsextraktion ("feature extraction") und die diesem Block nachgeschaltete eine oder mehr als eine vollverbundene Zwischenschicht 1408 die Funktion der Entscheidungsfindung ("decision making") bereitstellen, z.B. anhand der zuvor extrahierten Merkmale. Man könnte diese Merkmale, bzw. deren Vorhandensein in verschiedenen Regionen auch direkt an die Abschlussschicht 1404 übergeben, was allerdings die möglichen Entscheidungswege begrenzt und unter Umständen, je nach vorliegenden Randbedingungen, nicht ausreichend sein kann.

Ein ähnlich großes neuronales Netz als Klassifikator 1307, das allgemeingültigere Probleme löst, weist zwei oder mehr solcher Zwischenschichten 1408 für die Entscheidungsfindung auf.

Da eine Zwischenschicht 1408 die meisten Parameter annimmt, ist sie anfällig für eine Überanpassung. Um dieser Überanpassung entgegenzuwirken, kann dieser eine sogenannte Abbruchrate p ("dropout rate") vorgegeben werden. Dazu werden pro Trainingsphase einzelne Knoten mit der Wahrscheinlichkeit 1-p aus dem Netzwerk entfernt (hier ist exemplarisch p=0,5) oder mit der Wahrscheinlichkeit p behalten, so dass ein reduziertes Netzwerk übrig bleibt. In der Trainingsphase wird dann nur das reduzierte Netzwerk auf die Daten dieser Trainingsphase trainiert. Nach der Trainingsphase werden die entfernten Knoten wieder mit ihren ursprünglichen Gewichten dem Netzwerk hinzugefügt.

Die Ausgabeschicht 1404 (auch als Klassifikationsschicht bezeichnet) kann die Ausgabe der zumindest einen Zwischenschicht 1408 in die entsprechenden Klassen überführen. Beispielsweise kann die Ausgabeschicht 1404 einen K-dimensionalen Vektor σ (hier ist K exemplarisch 3) ausgeben und eine Softmax-Funktion als Aktivierungsfunktion verwendet werden. Die sogenannte Softmax-Funktion (kurz auch als Softmax oder normalisierte Exponentialfunktion bezeichnet) ist eine Generalisierung der logistischen Funktion, die einen K-dimensionalen Vektor mit reellen Komponenten in einen K-dimensionalen Vektor σ ebenfalls als Vektor reeller Komponenten in den Wertebereich (0, 1) transformiert, wobei sich die Komponenten zu 1 aufsummieren.

Beispiele für die Trainingsdaten zum Trainieren des Klassifikators 1307 können aufweisen: Bilddaten des leeren Erkennungsbereichs, Bilddaten des Erkennungsbereichs mit Hand, Bilddaten des Erkennungsbereichs mit Produkt, Bilddaten des Erkennungsbereichs mit Hand und Produkt. Beispiele für Zielgröße zum Trainieren des Klassifikators 1307 können die mehreren Bildklassen aufweisen.

Alternativ oder zusätzlich mögliche Beispiele für Trainingsdaten können aufweisen, dass die Tiefeninformation, auch zum Trainieren des Klassifikators 1307 verwendet wird, so dass diese anschaulich nicht zwangsläufig nur zum Freistellen verwendet werden muss.

Alternativ oder zusätzlich mögliche Beispiele für Zielgrößen zum Trainieren des Klassifikators 1307 können aufweisen, dass die Klasse "Gegenstand" und/oder die Klasse "Hand mit Gegenstand" weiter unterteilt werden, um das Erscheinungsbild der Artikel mit einen oder mehr als einem Referenzerscheinungsbild zu vergleichen. Vereinfacht gesagt kann sicherzustellt werden, dass der Gegenstand, der aus der Eingangszone entnommen wurde, auch in der Ausgangszone wieder ankommt und nicht getauscht wird.

Beispiele für den Klassifikator 1307 können verschiedene Formen des maschinellen Lernens zur Bildklassifikation aufweisen, wie beispielsweise
- das sogenannte "Histogram of oriented gradients" (HOG) in Kombination mit einer Stützvektormaschine (SVM);
- ein vortrainiertes kNN mit "Standard-Architektur" (z.B. GoogLeNet), das ferner per "Transferlernen" und Feinanpassung auf das gegebene Problem angepasst wird.

Letzteres bringt allerdings für das gegebene Problem hohe Hardware-Anforderungen mit sich.

## Patentansprüche

1. Selbstbedienungs-Registrierterminal (100 bis 300), aufweisend:
• eine Bilderfassungsvorrichtung (102), welche eingerichtet ist, Bilddaten (202b) eines Erfassungsbereichs (102e) zu erfassen;
• eine Produkterfassungsvorrichtung (104) zum Erfassen einer Produktkennung (202a) eines Produkts (404) in dem Erfassungsbereich (102e), wenn das Produkt (404) der Produkterfassungsvorrichtung (104) präsentiert wird;
• eine Steuervorrichtung (106), die eingerichtet ist:
zum Ermitteln (1009) von Zahlungsinformationen (204) basierend auf der Produktkennung (202a);
zum Ermitteln (401, 705) eines Bewegungsmusters (214m) basierend auf den Bilddaten (202b) und auf Grundlage von Tiefeninformationen (916) des Erfassungsbereichs (102e), wobei das Bewegungsmuster (214m) eine Bewegung (404) in dem Erfassungsbereich (102e) repräsentiert, und wobei das Ermitteln des Bewegungsmusters (214m) aufweist, die Bilddaten (202b) des Erfassungsbereichs (102e) zu filtern (701) auf Grundlage der Tiefeninformationen (916);
zum Ermitteln (403) einer Angabe (214) über eine Vertrauenswürdigkeit der Zahlungsinformationen (204) basierend auf dem Bewegungsmuster (214m);
wobei das Ermitteln (401, 705) des Bewegungsmusters (214m) aufweist, die Bilddaten (202b) zu klassifizieren (703) auf Grundlage der gefilterten Bilddaten (212b), vorzugsweise mittels einer Objekterkennung; wobei das Klassifizieren (703) aufweist, den Bilddaten (202b) eine Klasse aus mehreren Klassen zuzuordnen, von denen eine Klasse repräsentiert, dass das Produkt (404) in einem Teilbereich (311a, 311b, 311c) des Erkennungsbereichs (102e) angeordnet ist, und eine zusätzliche Klasse repräsentiert, dass der Teilbereich (311a, 311b, 311c) leer ist; wobei das Klassifizieren (703) mittels eines Klassifikators (1307) erfolgt und der Klassifikator als faltendes neuronales Netzwerk eingerichtet ist; wobei der Klassifikator (1307) eine Eingabeschicht (1402) aufweist und Bilddaten in die Eingabeschicht (1402) eingehen und die eingehenden Bilddaten mittels einer Matrix repräsentiert werden und die Matrix in einer ersten Dimension eine erste räumliche Koordinate, in einer zweiten Dimension eine zweite räumliche Koordinate, in einer dritten Dimension Farbinformation und in einer vierten Dimension Tiefeninformation umfasst.

2. Selbstbedienungs-Registrierterminal (100 bis 300) gemäß Anspruch 1, wobei das Ermitteln der Angabe (214) aufweist, das Bewegungsmuster (214m) mit einem abgespeicherten Referenz-Bewegungsmuster zu vergleichen.

3. Selbstbedienungs-Registrierterminal (100 bis 300) gemäß einem der Ansprüche 1 bis 2, wobei das Ermitteln der Angabe (214) aufweist, eine zeitliche Relation zwischen der Bewegung und dem Erfassen der Produktkennung (202a) zu berücksichtigen.

4. Selbstbedienungs-Registrierterminal (100 bis 300) gemäß einem der Ansprüche 1 bis 3, wobei das Ermitteln der Angabe (214) aufweist, die zeitliche und/oder räumliche Abfolge der Bewegung zu berücksichtigen.

5. Selbstbedienungs-Registrierterminal (100 bis 300) gemäß einem der Ansprüche 1 bis 4, wobei die Bilderfassungsvorrichtung (102) ferner eingerichtet ist, die Tiefeninformationen (916) zu erfassen.

6. Selbstbedienungs-Registrierterminal (100 bis 300) gemäß einem der Ansprüche 1 bis 5, wobei das Filtern aufweist, eine Tiefeninformation des Erfassungsbereichs auf eine Farbinformation der Bilddaten abzubilden, vorzugsweise unter Verwendung einer Filtermaske, auf welche die Tiefeninformationen abgebildet werden.

7. Selbstbedienungs-Registrierterminal (100 bis 300) gemäß einem der Ansprüche 1 bis 6, wobei das Filtern (701) aufweist, zumindest ein erstes Datensegment (704) zu ermitteln, welches zumindest das Produkt (404) repräsentiert, und ein zweites Datensegment (702) zu ermitteln, welches eine Umgebung des Produkts (404) repräsentiert.

8. Selbstbedienungs-Registrierterminal (100 bis 300) gemäß Anspruch 7, wobei das Filtern (701) aufweist, das zweite Datensegment (702) herauszufiltern.

9. Selbstbedienungs-Registrierterminal (100 bis 300) gemäß einem der Ansprüche 1 bis 8, wobei das Bewegungsmuster (214m) bezogen ist auf einen Teilbereich (311a, 311b, 311c) des Erfassungsbereichs (102e), wobei das Bewegungsmuster (214m) repräsentiert, ob die Bewegung in den Teilbereich (311a, 311b, 311c) hinein und/oder aus diesem heraus erfolgt.

10. Selbstbedienungs-Registrierterminal (100 bis 300) gemäß einem der Ansprüche 1 bis 9 ferner aufweisend:
• ein Zahlungsmittel-Terminal, das eingerichtet ist, eine Zahlungstransaktion durchzuführen,
• wobei die Steuervorrichtung (106) ferner eingerichtet ist zum Initiieren der Zahlungstransaktion gemäß den Zahlungsinformationen (204), wenn die Angabe (214) über die Vertrauenswürdigkeit ein vordefiniertes Kriterium erfüllt und andernfalls ein Alarmsignal auszugegeben, welches repräsentiert, dass die Vertrauenswürdigkeit der Zahlungsinformationen (204) zweifelhaft ist.

11. Computerimplementiertes Verfahren, aufweisend:
• Ermitteln (1009) von Zahlungsinformationen (204) basierend auf einer Produktkennung (202a) eines Produkts (404) in einem Erfassungsbereich (102e);
• Ermitteln (401, 705) eines Bewegungsmusters (214m) basierend auf Bilddaten (202b) des Erfassungsbereichs (102e) und auf Grundlage von Tiefeninformationen (916) des Erfassungsbereichs (102e), wobei das Bewegungsmuster (214m) eine Bewegung in dem Erfassungsbereich (102e) repräsentiert, und wobei das Ermitteln des Bewegungsmusters (214m) aufweist, die Bilddaten (202b) des Erfassungsbereichs (102e) zu filtern (701) auf Grundlage der Tiefeninformationen (916);
• Ermitteln (403) einer Angabe (214) über eine Vertrauenswürdigkeit der Zahlungsinformationen (204) basierend auf dem Bewegungsmuster (214m); wobei
das Ermitteln (401, 705) des Bewegungsmusters (214m) aufweist, die Bilddaten (202b) zu klassifizieren (703) auf Grundlage der gefilterten Bilddaten (212b), vorzugsweise mittels einer Objekterkennung; wobei das Klassifizieren (703) aufweist, den Bilddaten (202b) eine Klasse aus mehreren Klassen zuzuordnen, von denen eine Klasse repräsentiert, dass das Produkt (404) in einem Teilbereich (311a, 311b, 311c) des Erkennungsbereichs (102e) angeordnet ist, und eine zusätzliche Klasse repräsentiert, dass der Teilbereich (311a, 311b, 311c) leer ist; wobei das Klassifizieren (703) mittels eines Klassifikators (1307) erfolgt und der Klassifikator als faltendes neuronales Netzwerk eingerichtet ist; wobei der Klassifikator (1307) eine Eingabeschicht (1402) aufweist und Bilddaten in die Eingabeschicht (1402) eingehen und die eingehenden Bilddaten mittels einer Matrix repräsentiert werden und die Matrix in einer ersten Dimension eine erste räumliche Koordinate, in einer zweiten Dimension eine zweite räumliche Koordinate, in einer dritten Dimension Farbinformation und in einer vierten Dimension Tiefeninformation umfasst.

12. Nichtflüchtiges Speichermedium, das Codesegmente aufweist, die eingerichtet sind, wenn von einem Prozessor ausgeführt, das Verfahren gemäß Anspruch 11 durchzuführen.

13. Steuervorrichtung (106), die eingerichtet ist, das Verfahren gemäß Anspruch 11 durchzuführen.

## Claims

1. Self-service checkout terminal (100 to 300), comprising:
• an image capture device (102) configured to capture image data (202b) of a capture region (102e) ;
• a product capture device (104) for capturing a product identifier (202a) of a product (404) in the capture region (102e) when the product (404) is presented to the product capture device (104);
• a control device (106) configured:
for determining (1009) payment information (204) on the basis of the product identifier (202a);
for determining (401, 705) a movement pattern (214m) on the basis of the image data (202b) and on the basis of depth information (916) of the capture region (102e), wherein the movement pattern (214m) represents a movement (404) in the capture region (102e) and wherein determining the movement pattern (214m) comprises filtering (701) the image data (202b) of the capture region (102e) on the basis of the depth information (916);
for determining (403) an indication (214) about a trustworthiness of the payment information (204) on the basis of the movement pattern (214m);
wherein determining (401, 705) the movement pattern (214m) comprises classifying (703) the image data (202b) on the basis of the filtered image data (212b), preferably by means of object recognition;
wherein the classifying (703) comprises assigning one class from a plurality of classes to the image data (202b), of which classes one class represents the product (404) being arranged in a partial region (311a, 311b, 311c) of the capture region (102e) and an additional class represents the partial region (311a, 311b, 311c) being empty; wherein the classifying (703) is effected by means of a classifier (1307) and the classifier is configured as a convolutional neural network; wherein the classifier (1307) comprises an input layer (1402) and image data are received in the input layer (1402) and the incoming image data are represented by means of a matrix and the matrix comprises a first spatial coordinate in a first dimension, a second spatial coordinate in a second dimension, color information in a third dimension and depth information in a fourth dimension.

2. Self-service checkout terminal (100 to 300) according to Claim 1, wherein determining the indication (214) comprises comparing the movement pattern (214m) with a stored reference movement pattern.

3. Self-service checkout terminal (100 to 300) according to either of Claims 1 and 2, wherein determining the indication (214) comprises taking account of a temporal relation between the movement and the capturing of the product identifier (202a).

4. Self-service checkout terminal (100 to 300) according to any of Claims 1 to 3, wherein determining the indication (214) comprises taking account of the temporal and/or spatial sequence of the movement.

5. Self-service checkout terminal (100 to 300) according to any of Claims 1 to 4, wherein the image capture device (102) is furthermore configured to capture the depth information (916).

6. Self-service checkout terminal (100 to 300) according to any of Claims 1 to 5, wherein the filtering comprises mapping depth information of the capture region onto color information of the image data, preferably using a filter mask, onto which the depth information is mapped.

7. Self-service checkout terminal (100 to 300) according to any of Claims 1 to 6, wherein the filtering (701) comprises determining at least one first data segment (704) representing at least the product (404) and determining a second data segment (702) representing an environment of the product (404).

8. Self-service checkout terminal (100 to 300) according to Claim 7, wherein the filtering (701) comprises filtering out the second data segment (702).

9. Self-service checkout terminal (100 to 300) according to any of Claims 1 to 8, wherein the movement pattern (214m) is related to a partial region (311a, 311b, 311c) of the capture region (102e), wherein the movement pattern (214m) represents whether the movement takes place into the partial region (311a, 311b, 311c) and/or out of the latter.

10. Self-service checkout terminal (100 to 300) according to any of Claims 1 to 9, furthermore comprising:
• a payment means terminal configured to carry out a payment transaction,
• wherein the control device (106) is furthermore configured for initiating the payment transaction in accordance with the payment information (204) if the indication (214) about the trustworthiness satisfies a predefined criterion, and otherwise to output an alarm signal representing the trustworthiness of the payment information (204) being dubious.

11. Computer-implemented method comprising:
• determining (1009) payment information (204) on the basis of a product identifier (202a) of a product (404) in a capture region (102e);
• determining (401, 705) a movement pattern (214m) on the basis of image data (202b) of the capture region (102e) and on the basis of depth information (916) of the capture region (102e), wherein the movement pattern (214m) represents a movement in the capture region (102e) and wherein determining the movement pattern (214m) comprises filtering (701) the image data (202b) of the capture region (102e) on the basis of the depth information (916);
• determining (403) an indication (214) about a trustworthiness of the payment information (204) on the basis of the movement pattern (214m); wherein determining (401, 705) the movement pattern (214m) comprises classifying (703) the image data (202b) on the basis of the filtered image data (212b), preferably by means of object recognition; wherein the classifying (703) comprises assigning one class from a plurality of classes to the image data (202b), of which classes one class represents the product (404) being arranged in a partial region (311a, 311b, 311c) of the capture region (102e) and an additional class represents the partial region (311a, 311b, 311c) being empty; wherein the classifying (703) is effected by means of a classifier (1307) and the classifier is configured as a convolutional neural network; wherein the classifier (1307) comprises an input layer (1402) and image data are received in the input layer (1402) and the incoming image data are represented by means of a matrix and the matrix comprises a first spatial coordinate in a first dimension, a second spatial coordinate in a second dimension, color information in a third dimension and depth information in a fourth dimension.

12. Non-volatile storage medium comprising code segments configured, when executed by a processor, to carry out the method according to Claim 11.

13. Control device (106) configured to carry out the method according to Claim 11.

## Revendications

1. Terminal d'enregistrement en libre-service (100 à 300), présentant :
• un dispositif de détection d'image (102) qui est conçu pour détecter des données d'image (202b) d'une zone de détection (102e) ;
• un dispositif de détection de produit (104) pour détecter un identifiant de produit (202a) d'un produit (404) dans la zone de détection (102e) si le produit (404) est présenté devant le dispositif de détection de produit (104) ;
• un dispositif de commande (106) qui est conçu pour :
déterminer (1009) des informations de paiement (204) basées sur l'identifiant de produit (202a) ;
déterminer (401, 705) un schéma de mouvement (214m) basé sur les données d'image (202b) et sur la base d'informations de profondeur (916) de la zone de détection (102e), dans lequel le schéma de mouvement (214m) représente un mouvement (404) dans la zone de détection (102e), et dans lequel la détermination du schéma de mouvement (214m) comprend le fait de filtrer (701) les données d'image (202b) de la zone de détection (102e) sur la base des informations de profondeur (916) ;
déterminer (403) une indication (214) concernant la fiabilité des informations de paiement (204) basées sur le schéma de mouvement (214m) ;
dans lequel la détermination (401, 705) du schéma de mouvement (214m) comprend le fait de classifier (703) les données d'image (202b) sur la base des données d'image (212b) filtrées, de préférence par reconnaissance d'objet ;
dans lequel la classification (703) comprend le fait d'associer une classe parmi plusieurs classes aux données d'image (202b) dont une classe représente le fait que le produit (404) est disposé dans une zone partielle (311a, 311b, 311c) de la zone de reconnaissance (102e), et une classe supplémentaire représente le fait que la zone partielle (311a, 311b, 311c) est vide ;
dans lequel la classification (703) est effectuée au moyen d'un classificateur (1307), et le classificateur est conçu en tant que réseau neuronal convolutif ;
dans lequel le classificateur (1307) présente une couche d'entrée (1402), et des données d'image entrent dans la couche d'entrée (1402), et les données d'image entrantes sont représentées au moyen d'une matrice, et la matrice comprend dans une première dimension une première coordonnée spatiale, dans une deuxième dimension une deuxième coordonnée spatiale, dans une troisième dimension des informations de couleur et dans une quatrième dimension des informations de profondeur.

2. Terminal d'enregistrement en libre-service (100 à 300) selon la revendication 1, dans lequel la détermination de l'indication (214) comprend le fait de comparer le schéma de mouvement (214m) avec un schéma de mouvement de référence sauvegardé.

3. Terminal d'enregistrement en libre-service (100 à 300) selon l'une quelconque des revendications 1 à 2, dans lequel la détermination de l'indication (214) comprend le fait de prendre en compte une relation temporelle entre le mouvement et la détection de l'identifiant de produit (202a).

4. Terminal d'enregistrement en libre-service (100 à 300) selon l'une quelconque des revendications 1 à 3, dans lequel la détermination de l'indication (214) comprend le fait de prendre en compte le déroulement temporel et/ou spatial du mouvement.

5. Terminal d'enregistrement en libre-service (100 à 300) selon l'une quelconque des revendications 1 à 4, dans lequel le dispositif de détection d'image (102) est en outre conçu pour détecter les informations de profondeur (916).

6. Terminal d'enregistrement en libre-service (100 à 300) selon l'une quelconque des revendications 1 à 5, dans lequel le filtrage comprend le fait de mapper une information de profondeur de la zone de détection sur une information de couleur des données d'image, de préférence en utilisant un masque de filtre sur lequel les informations de profondeur sont mappées.

7. Terminal d'enregistrement en libre-service (100 à 300) selon l'une quelconque des revendications 1 à 6, dans lequel le filtrage (701) comprend le fait de déterminer au moins un premier segment de données (704) qui représente au moins le produit (404), et de détecter un deuxième segment de données (702) qui représente un environnement du produit (404).

8. Terminal d'enregistrement en libre-service (100 à 300) selon la revendication 7, dans lequel le filtrage (701) comprend le fait d'extraire le deuxième segment de données (702).

9. Terminal d'enregistrement en libre-service (100 à 300) selon l'une quelconque des revendications 1 à 8, dans lequel le schéma de mouvement (214m) se réfère à une zone partielle (311a, 311b, 311c) de la zone de détection (102e), dans lequel le schéma de mouvement (214m) représente si le mouvement est effectué dans la zone partielle (311a, 311b, 311c) et/ou hors de celle-ci.

10. Terminal d'enregistrement en libre-service (100 à 300) selon l'une quelconque des revendications 1 à 9, présentant en outre :
• un terminal de moyen de paiement qui est conçu pour effectuer une transaction de paiement,
• dans lequel le dispositif de commande (106) est en outre conçu pour lancer la transaction de paiement selon les informations de paiement (204) si l'indication (214) concernant la fiabilité satisfait un critère prédéfini, et sinon pour délivrer un signal d'alarme qui représente le fait que la fiabilité des informations de paiement (204) est douteuse.

11. Procédé mis en œuvre par ordinateur, présentant les étapes consistant à :
déterminer (1009) des informations de paiement (204) basées sur un identifiant de produit (202a) d'un produit (404) dans une zone de détection (102e) ;
déterminer (401, 705) un schéma de mouvement (214m) basé sur des données d'image (202b) de la zone de détection (102e) et sur la base d'informations de profondeur (916) de la zone de détection (102e), dans lequel le schéma de mouvement (214m) représente un mouvement dans la zone de détection (102e), et dans lequel la détermination du schéma de mouvement (214m) comprend le fait de filtrer (701) les données d'image (202b) de la zone de détection (102e) sur la base des informations de profondeur (916) ;
déterminer (403) une indication (214) concernant la fiabilité des informations de paiement (204) basées sur le schéma de mouvement (214m) ;
dans lequel la détermination (401, 705) du schéma de mouvement (214m) comprend le fait de classifier (703) les données d'image (202b) sur la base des données d'image (212b) filtrées, de préférence par reconnaissance d'objet ;
dans lequel la classification (703) comprend le fait d'associer une classe parmi plusieurs classes aux données d'image (202b) dont une classe représente le fait que le produit (404) est disposé dans une zone partielle (311a, 311b, 311c) de la zone de reconnaissance (102e), et une classe supplémentaire représente le fait que la zone partielle (311a, 311b, 311c) est vide ;
dans lequel la classification (703) est effectuée au moyen d'un classificateur (1307), et le classificateur est conçu en tant que réseau neuronal convolutif ;
dans lequel le classificateur (1307) présente une couche d'entrée (1402) et des données d'image entrent dans la couche d'entrée (1402), et les données d'image entrantes sont représentées au moyen d'une matrice, et la matrice comprend dans une première dimension une première coordonnée spatiale, dans une deuxième dimension une deuxième coordonnée spatiale, dans une troisième dimension des informations de couleur et dans une quatrième dimension des informations de profondeur.

12. Support de stockage non volatile qui présente des segments de code qui, lorsqu'ils sont exécutés par un processeur, sont conçus pour exécuter le procédé selon la revendication 11.

13. Dispositif de commande (106) qui est conçu pour exécuter le procédé selon la revendication 11.
